(19) Europäisches Patentamt
European Patent Office
Office européen des brevets

(11) EP 3 759 173 B1

(12) **EUROPEAN PATENT SPECIFICATION**

(45) Date of publication and mention of the grant of the patent:
**13.03.2024 Bulletin 2024/11**

(21) Application number: **19701541.5**

(22) Date of filing: **31.01.2019**

(51) International Patent Classification (IPC):
***C09D 1/02*** *(2006.01)* ***C09D 5/04*** *(2006.01)*
***C09D 7/43*** *(2018.01)*

(52) Cooperative Patent Classification (CPC):
**C09D 1/02; C09D 5/04; C09D 7/43;** C08K 3/34

(86) International application number:
**PCT/EP2019/052317**

(87) International publication number:
**WO 2019/166175 (06.09.2019 Gazette 2019/36)**

(54) **PAINT COMPOSITIONS CONTAINING WATER GLASS**

FARBZUSAMMENSETZUNGEN MIT WASSERGLAS

COMPOSITIONS DE PEINTURE CONTENANT DU VERRE SOLUBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2018 EP 18159351**

(43) Date of publication of application:
**06.01.2021 Bulletin 2021/01**

(73) Proprietor: **Clariant International Ltd**
**4132 Muttenz (CH)**

(72) Inventors:
- **PITARCH LOPEZ, Jesus**
  **60431 Frankfurt am Main (DE)**
- **RÜGER, Jörg**
  **63773 Goldbach (DE)**
- **KUPFER, Rainer**
  **65795 Hattersheim (DE)**
- **FISCHER, Dirk**
  **55278 Hahnheim (DE)**
- **HÖVELMANN, Felix**
  **84453 Mühldorf am Inn (DE)**
- **SCHAEFER, Carsten**
  **60311 Frankfurt (DE)**

(74) Representative: **Clariant Produkte (Deutschland) GmbH**
**Patent Management**
**Industriepark Höchst, G 860**
**65926 Frankfurt am Main (DE)**

(56) References cited:
**EP-A1- 2 759 337**
**EP-A2- 1 179 517**
**WO-A1-02/00798**
**WO-A1-2016/128033**
**WO-A1-2017/194270**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This invention relates to novel paint compositions containing water glass which show excellent storage stability and handling properties.

BACKGROUND OF THE INVENTION

Water glass is the common name given to water soluble silicates containing varying proportions of an alkali metal or quaternary ammonium ion and silica.

The use of water glass in paints is widespread, however it is also associated to limitations in the handling and application properties due to the tendency to fast increase of viscosity and strong gelation of the paints during storage.

Control over the rheology of paints is critical to achieve good handling and application properties. In "Rheology Reviews 2005, pp 173 - 240" an extensive description of how the commercial viability and success of paints and coatings are linked to the right rheological properties of the products is reported. Easiness of stirring, loading and brushing or rolling of a paint are directly related to its viscosity. The time-dependent shear thinning effect, referred as thixotropy, gives a good estimation of how strong the interactions between the components of a paint during shearing are and indicates, for example, how much effort has to be invested to achieve optimal mixing. The gel character of a paint is given by its elastic module, which is an excellent descriptor of the strength of the colloidal interactions between the paint components under very low shear stress, as it is the case during storage. High elastic module is undesired since paint appearance and workability would be gel-like.

In order to improve the rheological properties of paints containing water glass, the use of specific additives is a common practice in the industry.

DE-19925412 describes paint compositions containing water soluble silicates. The use of water soluble quaternary organic amines is described to have a beneficial effect on the stabilization of the paint viscosity during storage. The viscosity of the claimed paint as described in the invention related examples increased by a factor of 1.8 after being stored for 30 days at 40 °C. No information about the final viscosity value and about the thixotropy and gel character of the paint after storage is provided.

WO2016128033 teaches a drip-forming aqueous coating compound, in particular a dispersion coating compound, containing at least one inorganic water-soluble binder or at least one organic binder that is in particular dispersed or dispersible in water or and emulsifiable or emulsified in water, at least one filling material and/or at least one pigment, and water, which has a rheological profile involving a strongly reduced tendency to form spray during application with the paint roller. The invention further relates to a paint produced with the coating compound according to the invention. In addition, the invention relates to a testing device for determining the spray behaviour of drip-forming aqueous coating compounds, and to a method for determining the spray behaviour during the application of drip-forming, aqueous, in particular flowable, coating compounds using a paint roller.

EPA-1179517 provides: a cement dispersant which displays high dispersibility with a small addition amount and excellent dispersibility particularly even in a high water-reducing ratio area, and a cement composition comprising this. The first cement dispersant comprises a copolymer including: constitutional unit (1-1) derived from unsaturated (poly)alkylene glycol ether monomer (a1) as represented in general formula (1) below; and constitutional unit (II-1) derived from unsaturated monocarboxylic acid monomer (b1) as represented in general formula (2) below, as an essential component, wherein constitutional unit (II-1) includes at least one structure derived from an acrylic acid (salt), wherein general formula (1) is:

$$XO(R^1O)_nH \qquad (1)$$

where:

- X represents an alkenyl group having 4 carbon atoms;
- $R^1O$ represents a mixture of one or more of an oxyalkylene group having 2 to 18 carbon atoms, and an oxyethylene group accounts for not less than 90 mol % of the entirety of the oxyalkylene groups; and
- n is an average addition number of moles and represents 1 to 300; and

wherein general formula (2) is:

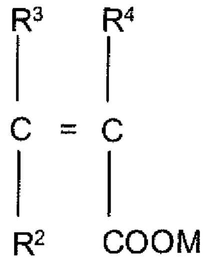

(2)

where:

$R^2$, $R^3$, and $R^4$ each independently represent hydrogen or a methyl group; and

M represents hydrogen, a monovalent metal, a divalent metal, an ammonium group, or an organic amine group.

WO-2008/037382 describes the use of mixtures comprising one or more amines with a molecular weight between 120 and 10000 and one or more alkyl siliconates for stabilization of the viscosity of water glass containing paints. The viscosity of the claimed paint compositions as described in the invention related examples increased by a factor of 1.9 after being stored for 28 days at 30 °C and reached a final value of 3600 mPas. No information about the thixotropy and gel character of the paint after storage was provided.

WO-02/00798 describes paints containing a maximum of 2 percent by weight of water glass. It is ambiguous either the term water glass refers to the active or to the aqueous silicate solution. The claimed paint compositions are said to show excellent stability and handling properties similar to those of polymer dispersion paints, but no rheological data are reported to support that claims. Furthermore, the use of stabilizing additives is not explicitly described.

It has been observed that paint compositions comprising water glass will increase their viscosity, thixotropy and gel character during storage. This is an undesired effect since it will impede the handling properties of such paint compositions.

Besides minor viscosity change and moderate final viscosity values after storage, low thixotropic behavior and weak gel character are the key rheological properties needed in order to achieve paint compositions containing water glass which show excellent storage stability and are easy to handle and to use. There is a lack of paint compositions containing water glass showing such rheological properties. It was the object of this invention to provide additives for water glass containing paint compositions that will mitigate the increase in the viscosity, thixotropy and gel character during storage of such paint compositions.

Surprisingly, it has now been found that aqueous paint compositions according to the invention have excellent storage stability and handling properties.

In a first aspect, the present invention relates to an aqueous paint composition comprising:

1) 0.01 to 5 wt.-% of a copolymer comprising

(A) from 50 mol-% to 98 mol-% of repeating anionic structural units comprising at least one carboxylate group, and

(B) 2 mol-% to 50 mol-% repeating units according to formula (B1)

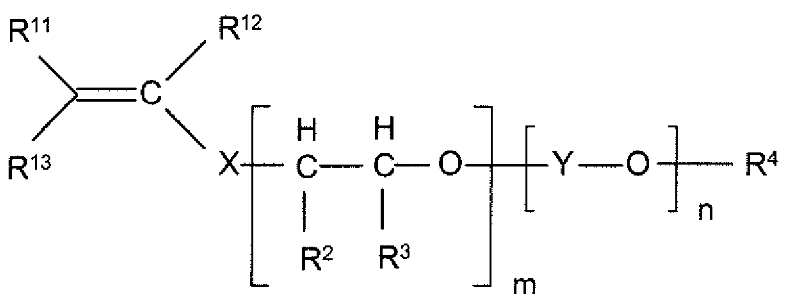

(B1)

wherein

$R^{11}$, $R^{12}$, $R^{13}$, are independently selected from the group consisting of H, methyl, ethyl,
$R^2$ and $R^3$ are independently selected from the group consisting of H, methyl, ethyl or phenyl,
$R^4$ is selected from H or an alkyl group with 1 to 4 carbon atoms,
X is selected from O, $CH_2O$ or $CH_2CH_2O$,
Y is selected from an alkylene group with 1 to 28 carbon atoms or a phenylene group,

m is an integer from 1 to 500,
n is an integer from 0 to 500; and
m + n $\geq 5$,

2) 3.5 to 15.0 wt.-% of water glass,

3) 1.0 to 10 wt.-% of an organic polymeric binder,

4) 0.1 to 2.0 wt.-% of a stabilizer according to formula (C)

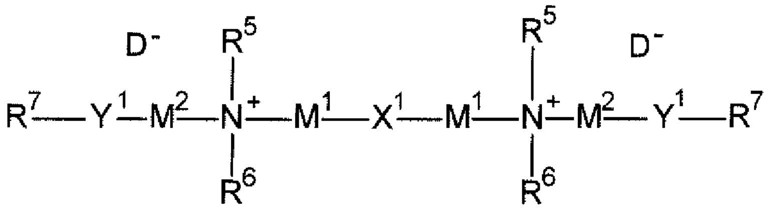

(C)

wherein

$R^5$ and $R^6$ are independently selected from alkyl groups containing 1 - 8 carbon atoms,
$R^7$ is selected from a group consisting of H or an alkyl group containing 1 to 18 carbon atoms,
$M^1$ and $M^2$ are independently selected from alkenyl groups containing 1 to 5 carbon atoms
$X^1$ is selected from the group consisting of a covalent bond, methylene, O or $N^+(R^5R^6)$,
$Y^1$ is selected from group consisting of a covalent bond or an amide group -NHC(O)-,
$D^-$ is an anion,

5) 10 to 70 wt.-% of pigments and/or fillers,

6) 20 to 85 wt.-% of water.

In a second aspect, this invention relates to the use of a copolymer as defined under 1) above to diminish the increase of viscosity, thixotropy and gel character upon storage of an aqueous paint composition, comprising the components 2), 3), 4), 5) and 6) as defined above.

In one preferred embodiment, the composition according to the invention comprises up to 10 wt.-% of further additives.

In another preferred embodiment, the composition according to the invention comprises 30 to 60 wt.-% water.

Copolymers derived from the mentioned structural units (A) and (B) have been previously described. DE-10063291 teaches the use of such copolymers as flow agents for anhydrite-based flow screeds. EP-1179517 describes copolymers derived from the structural units (A) and (B) as cement dispersants.

In contrast to water glass, both anhydrite and cement are solid materials which are dispersed but not dissolved in water and therefore the interactions between the polymers and the soluble silicates are expected to be completely different than those between the polymers and the anhydrite and cement particles. Surprisingly, it was found that the above mentioned copolymers showed a highly effective stabilizing effect on the rheological properties of paints containing water glass.

Units (A)

In a preferred embodiment, the molar proportion of repeating anionic structural units comprising at least one carboxylate group is 55 mol-% to 95 mol-%, more preferred from 60 mol-% to 90 mol-%.

In a preferred embodiment, the repeating anionic structural unit results from the incorporation of monomers according to formula (A1):

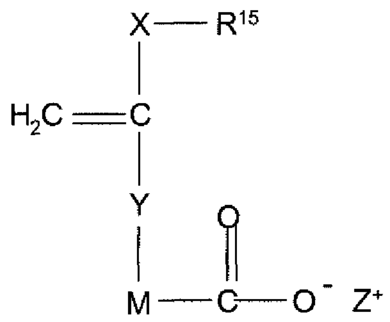

(A1)

wherein

| | |
|---|---|
| X, Y | are selected from the group consisting of a covalent bond, O, $CH_2$, C(O)O, OC(O), C(O)$NR^{14}$ or $NR^{14}$C(O); |
| $R^{15}$ and $R^{14}$ | are independently selected from the group consisting of H, methyl, ethyl, and C(O)$O^-Z^+$; |
| M | is selected from the group consisting of a covalent bond, -[C(O)O-$CH_2$-$CH_2$]$_k$-, a linear or branched alkylene group with 1 to 6 carbon atoms, a linear or branched, mono- or polyunsaturated alkenylene group with 2 to 6 carbon atoms, a linear mono-hydroxyalkylene group with 2 to 6 carbon atoms or a linear or branched di-hydroxyalkylene group with 3 to 6 carbon atoms; |
| k | is an integer from 1 to 5; and |
| $Z^+$ | is selected from the group consisting of $Li^+$, $Na^+$, $K^+$, ½ $Ca^{++}$, ½ $Mg^{++}$, ½ $Zn^{++}$, ⅓ $Al^{+++}$, $H^+$, $NH_4^+$, an organic ammonium ion $[HNR^8R^9R^{10}]^+$ |
| $R^8$, $R^9$, $R^{10}$ | are independently hydrogen, a linear or branched alkyl group with 1 to 22 carbon atoms, a linear or branched, mono- or polyunsaturated alkenyl group with 2 to 22 carbon atoms, a $C_6$ to $C_{22}$ alkylamido-propyl group, a linear mono-hydroxyalkyl group with 2 to 10 carbon atoms or a linear or branched di-hydroxyalkyl group with 3 to 10 carbon atoms, and wherein at least one of $R^8$, $R^9$ and $R^{10}$ is not hydrogen. |

In one preferred embodiment, $Z^+$ is $H^+$, $NH_4^+$, $Li^+$, $Na^+$, $K^+$, ½ $Ca^{++}$, ½ $Mg^{++}$, ½ $Zn^{++}$, or 1/3 $Al^{+++}$, more preferably $H^+$, $NH_4^+$, $Li^+$, $Na^+$ or $K^+$, most preferably $Na^+$.

In another preferred embodiment, $Z^+$ is selected from the group consisting of monoalkylammonium, dialkylammonium and trialkylammonium salts, in which the alkyl substituents may independently of one another be ($C_1$ to $C_{22}$)-alkyl radicals or ($C_2$ to $C_{10}$)-hydroxyalkyl radicals.

In a preferred embodiment, unit (A) is selected from the group consisting of acrylic acid, methacrylic acid, itaconic acid, carboxyethylacrylic acid, carboxyethylacrylic acid oligomers, 2-propylacrylic acid, 2-ethylacrylic acid, maleic acid and their respective salts.

In one preferred embodiment, the salts are with the cations selected from the group consisting of: $NH_4^+$, Li+, Na+, K+, ½ Ca++, ½ Mg++, ½ Zn++, or ⅓ Al+++, monoalkylammonium, dialkylammonium, trialkylammonium and/or tetraalkylammonium more preferably $NH_4^+$, Li+, Na+ or K+, most preferably Na+.

In one embodiment, the polymer comprises at least one repeating unit according to formula (A1). In another embodiment, the polymer comprises two or more different repeating units according to Formula (A). Such repeating units according to formula (A1) may have different $Z^+$ counterions.

The repeating units according to formula (1) have a degree of neutralisation of between 0 mol-% and 100 mol-%. In a preferred embodiment, the repeating units according to formula (A1) have a degree of neutralisation of from 50.0 to 100 mol-%, preferably from 80 mol-% to 100 mol-%, more preferably from 90.0 to 100 mol-%, even more preferably from 95.0 to 100 mol-%. Particular preference is being given to a degree of neutralisation of more than 80 mol-%, more preferably more than 90 mol-%, even more preferably more than 95 mol-%.

Units (B)

In a preferred embodiment, the polymer 1) comprises from 5 mol-% to 45 mol-%, preferably from 10 mol-% to 40 mol-% of repeating structural unit (B1).

In a preferred embodiment, the repeating structural unit (B1) comprises one alkylene oxide unit of the formula $-(CHR_2\text{-}CHR_3\text{-}O)_m-$, wherein all ($CHR_2$-$CHR_3$O) units are the same species, i.e. a homopolymer.

In another preferred embodiment, the repeating structural unit (B1) comprises two or more different alkylene oxide units of the formula $-(CHR_2\text{-}CHR_3\text{-}O)_m-$, wherein the ($CHR_2$-$CHR_3$O) units are selected from different species, i.e. a copolymer. The distribution of the different alkylene oxide units $-(CHR_2\text{-}CHR_3\text{-}O)_m$-can be random, alternating or

block-wise (i.e. block copolymer).

m is preferably a number from 5 to 200, more preferably 10 to 100.

In a preferred embodiment, the polymer comprises at least one repeating structural unit (B1) wherein $R^{11}$, $R^{12}$ and $R^{13}$ are H, and X is O. Such compounds are known as polyalkylene glycol vinylether.

In a preferred embodiment, the polymer comprises at least one repeating structural unit (B1) wherin $R^{11}$, $R^{13}$ are H, $R^{12}$ is $CH_3$ and X is $-CH_2-CH_2-O-$. Such compounds are known as polyalkylene glycol isoprenylether.

In a preferred embodiment, the polymer comprises at least one repeating structural unit (B1) wherein $R^{11}$, $R^{12}$ and $R^{13}$ are H, and X is $-CH_2-O-$. Such compounds are known as polyalkylene glycol allylether.

In a preferred embodiment, the polymer comprises at least one repeating structural unit (B1) wherein $R^{11}$, $R^{13}$ are H, $R^{12}$ is $CH_3$ and X is $-CH_2-O-$. Such compounds are known as polyalkylene glycol methallylether.

In a preferred embodiment, the repeating structural unit (B1) comprises at least one alkylene oxide, a substituted arylen group or a non-substituted arylen group unit $-(Y-O)_n-$. In a preferred embodiment, the repeating structural unit (B1) comprises two or more different alkylene oxide, a substituted arylen or a non-substituted arylen units $-(Y-O)_n-$. The distribution of the different $-(Y-O)_n-$ units can be random, alternating or block-wise (i.e. block copolymer).

In a preferred embodiment, the repeating structural unit (B1) comprises at least one $-(CHR_2-CHR_3-O)_m-$ unit and at least one $-(Y-O)_n-$ unit. This means that both m and n are different from zero. In a preferred embodiment, the repeating structural unit (B1) comprises two or more different $-(CHR_2-CHR_3-O)_m-$ unit and comprises two or more different $-(Y-O)_n-$ units. The distribution of the different $-(CHR_2-CHR_3-O)_m-$ and $-(Y-O)_n-$ units can be random, alternating or block-wise (i.e. block copolymer).

In one preferred embodiment, in formula B1 the $-(CHR_2-CHR_3-O)_m-$ unit means propylene oxide units and the $-(Y-O)_n-$ means ethylene oxide units. The distribution of the propylene oxide units and ethylene oxide units can be random, alternating or block-wise (i.e. block copolymer). m preferably is from 1 to 500 and n preferably is from 1 to 500.

In one preferred embodiment, the repeating structural unit (B1) comprises propylene oxide units and ethylene oxide units with a molar fraction of ethylene oxide > 50 %, more preferably > 95 % based on the sum total (100 %) of ethylene oxide and propylene oxide units.

In another preferred embodiment, n is 0. In this embodiment the repeating structural unit $-(CHR_2-CHR_3-O)_m-$ is preferably either an ethoxide group ($R^2$, $R^3$ = H) or it is a propoxide group ($R^2 = CH_3$ and $R^3$ = H or $R^3 = CH_3$ and $R^2$ = H).

In a preferred embodiment, m is from 2 to 500, preferably from 5 to 350 and more preferably from 15 to 150. If n is different from zero, it preferably is 1 to 500, more preferably 5 to 350 and most preferably 15 to 150.

In a preferred embodiment, $m + n \geq 10$, more preferably $m + n \geq 20$.

In a preferred embodiment, X is selected from O or $CH_2O$.

In a preferred embodiment, Y is selected from -CH2-, -CH2-CH2-, phenylene or -CH2-CHR wherein R is an alkyl group with 1 to 26 carbon atoms.

Optional units:

In a preferred embodiment, the copolymer 1) may comprise repeating anionic structural units comprising at least one carboxylate group and units (B1) so to add up to 100 mol-%.

In another preferred embodiment, the copolymer 1) may comprise other units than repeating anionic structural units comprising at least one carboxylate group and units (B1) These other units are referred to as optional units.

In a preferred embodiment, the optional unit result from the incorporation of a monomer selected from the group consisting of N-vinylformamide, N-vinylacetamide, N methyl-N-vinylformamide, N-methyl-N-vinylacetamide, N-vinyl-2-pyrrolidone (NVP), N vinylcaprolactam, vinylacetate, methylvinylether, ethylvinylether, methylallylether, ethylmethallylether, styrol, acetoxystyrol, methylmethallylether, ethylallylether, tert-butylacrylamide, N,N-diethylacrylamide, N,N-dimethylacrylamide, N,N-dimethylmethacrylamide, N,N-dipropylacrylamide, N-isopropylacrylamide, N-propylacrylamide, acrylamide, methacrylamide, methylacrylate, methymethacrylate, tert-butylacrylate, tert-butylmethacrylate, n-butylacrylate, n-butylmethacrylate, laurylacrylate, laurylmethacrylate, behenylacrylate, behenylmethacrylate, cetylacrylate, cetyl methacrylate, stearylacrylate, stearylmethacrylate, tridecylacrylate, tridecylmethacrylate, polyethoxy-(5)-methacrylate, polyethoxy-(5)-acrylate, polyethoxy-(10)-methacrylate, polyethoxy-(10)-acrylate, behenylpolyethoxy-(7)-methacrylate, behenylpolyethoxy-(7)-acrylate, behenylpolyethoxy-(8)-methacrylate, behenylpoly-ethoxy-(8)-acrylate, behenylpolyethoxy-(12)-methacrylate, behenylpoly-ethoxy-(12)-acrylate, behenylpolyethoxy-(16)-methacrylate, behenylpolyethoxy-(16)-acrylate, behenylpolyethoxy-(25)-methacrylate, behenylpolyethoxy-(25)-acrylate, laurylpolyethoxy-(7)-methacrylate, laurylpolyethoxy-(7)-acrylate, laurylpolyethoxy-(8)-methacrylate, laurylpolyethoxy-(8)-acrylate, laurylpolyethoxy-(12)-methacrylate, laurylpolyethoxy-(12)-acrylate, lauryipolyethoxy-(16)-methacrylate, laurylpolyethoxy-(16)-acrylate, laurylpolyethoxy-(22)-methacrylate, laurylpolyethoxy-(22)-acrylate, laurylpolyethoxy-(23)-methacrylate, laurylpolyethoxy-(23)-acrylate, cetylpolyethoxy-(2)-methacrylate, cetylpolyethoxy-(2)-acrylate, cetylpolyethoxy-(7)-methacrylate, cetylpolyethoxy-(7)-acrylate, cetylpolyethoxy-(10)-methacrylate, cetylpolyethoxy-(10)-acrylate, cetylpolyethoxy-(12)-methacrylate, cetylpolyethoxy-(12)-acrylate cetylpoly-ethoxy-(16)-methacrylate, cetylpoly-

ethoxy-(16)-acrylate cetylpolyethoxy-(20)-methacrylate, cetylpolyethoxy-(20)-acrylate, cetylpolyethoxy-(25)-methacrylate, cetyl polyethoxy-(25)-acrylate, cetylpolyethoxy-(25)-methacrylate, cetylpolyethoxy-(25)-acrylate, stearylpolyethoxy-(7)-methacrylate, stearylpolyethoxy-(7)-acrylate, stearylpoly-ethoxy-(8)-methacrylate, stearylpolyethoxy-(8)-acrylate, stearylpolyethoxy-(12)-methacrylate, stearylpolyethoxy-(12)-acrylate, stearylpolyethoxy-(16)-methacrylate, stearylpolyethoxy-(16)-acrylate, stearylpolyethoxy-(22)-methacrylate, stearylpoly-ethoxy-(22)-acrylate, stearylpolyethoxy-(23)-methacrylate, stearylpolyethoxy-(23)-acrylate, stearylpolyethoxy-(25)-methacrylate, stearylpolyethoxy-(25)-acrylate, tridecylpolyethoxy-(7)-methacrylate, tridecylpolyethoxy-(7)-acrylate, tridecylpolythoxy-(10)-methacrylate, tridecylpolyethoxy-(10)-acrylate, tridecylpolyethoxy-(12)-methacrylate, tridecylpolyethoxy-(12)-acrylate, tridecylpolyethoxy-(16)-methacrylate, tridecylpolyethoxy-(16)-acrylate, tridecylpolyethoxy-(22)-methacrylate, tridecylpolyethoxy-(22)-acrylate, tridecylpolyethoxy-(23)-methacrylate, tridecylpolyethoxy-(23)-acrylate, tridecylpolyethoxy-(25)-methacrylate, tridecylpolyethoxy-(25)-acrylate, methoxypolyethoxy-(7)-methacrylate, methoxy-polyethoxy-(7)-acrylate, methoxypoly-ethoxy-(12)-methacrylate, methoxypolyethoxy-(12)-acrylate, methoxypolyethoxy-(16)-methacrylate, methoxypolyethoxy-(16)-acrylate, methoxypolyethoxy-(25)-methacrylate, methoxy-polyethoxy-(25)-acrylate,

In the following, the method of making polymer 1) is described.

In a preferred embodiment, the polymer is obtained by polymerization of at least one repeating anionic structural unit comprising at least one carboxylate group of at least one structural unit (B1) and optionally at least one optional monomer.

In a preferred embodiment, the above monomers are dissolved or dispersed in a polar solvent. The polymerisation is preferably initiated by the addition of a radical initiator.

In a preferred embodiment, the monomer according to Formula (A1) can be neutralized by using gaseous ammonia, ammonia hydroxide solution, morpholine, monoalkylamine, dialkylamine, trialkylamine, tetraalkylammonium salts, 2-amino-2-methyl-1-propanol, N-methyl-D-glucamine, N,N-dimethyl-D-glucamine sodium hydrogen carbonate, sodium carbonate, sodium hydroxide, potassium hydrogen carbonate, potassium carbonate, potassium hydroxide, lithium hydrogen carbonate, lithium carbonate, lithium hydroxide, preferably sodium hydroxide, 2-amino-2-methyl-1-propanol, N-methyl-D-glucamine and N,N-dimethyl-D-glucamine.

In a preferred embodiment the synthesis of the polymer is carried out by radical polymerization in a polar solvent or a polar solvent mixture. Preferably the polar solvent or a polar solvent mixture has a boiling point between 60 °C and 130 °C, preferably between 60 °C and 120 °C and more preferably between 70 °C and 110 °C.

In a preferred embodiment the radical polymerization is carried out in a polar solvent comprising water.

In a preferred embodiment the polymerization is a radical precipitation polymerization which is carried out in a polar solvent mixture comprising

I) water and
II) a further compound.

In a preferred embodiment the compound II) is polar and organic.

In a more preferred embodiment the compound II) is selected from the group consisting of polar alcohols, ethers and ketones.

In a still more preferred embodiment, the compound II) is selected from the group consisting of methanol, ethanol, 1-propanol, 2-propanol, 2-methyl-2-propanol, 1-butanol, 2-butanol, dimethyl ketone, diethyl ketone, pentan-2-one, butanone, tetrahydro pyrane, tetrahydro furane, 2-methyl-tetrahydro furane, 1,3-dioxane, 1,4-dioxane, preferably 2-propanol, 2-methyl-2-propanol, dimethyl ketone, tetrahydro furane, 2-methyl-tetrahydro furane, more preferably 2-methyl-2-propanol and dimethyl ketone.

In a preferred embodiment, the polymerization reaction is initiated by a radical initiator compound selected from the group of azo-initiators (e.g. azo-bis-iso butyronitrile, 2,2'-azobis(4-methoxy-2.4-dimethyl valeronitrile), 2,2'-azobis(2.4-dimethyl valeronitrile), dimethyl 2,2'-azobis(2-methylpropionate), 2,2'-azobis(2-methylbutyronitrile), 1,1'-azobis(cyclohexane-1-carbonitrile) oder 2,2'-azobis[N-(2-propenyl)-2-methyl-propionamide]), peroxides (e.g. dilauryl peroxide, tert.-butylhydro peroxide, di-tert.-butyl peroxide, tri phenyl methyl hydroperoxid, benzoylperoxid) or persulfates (e.g. Ammonium persulfate, Sodium persulfate, Potassium persulfate). In a preferred embodiment, the initiation of the polymerization starts in a temperature interval between 30 °C up to 110 °C, preferably between 40 °C up to 90 °C during 30 minutes to serial hours.

In a preferred embodiment, the polymer 1) has a weight average molecular weight of at least 1000 g/mol, preferably from 1000 g/mol to 500,000 g/mol.

Water glass

The term water glass as component (2) of the present invention denotes water soluble silicates. The indicated

concentration refers to solids content of the water glass. The composition of water glass is typically defined by the molar ratio of silica to alkali metal or to quaternary ammonium ion. In paint applications, water glass is typically incorporated as aqueous solution of concentrations lower than 40 wt.-% and molar ratio >3.2. Preferred salts are alkali metals, especially preferred are potassium and lithium salts. In a preferred embodiment, the amount of water glass is from 3.5 to 15 wt.-%, more preferred from 4 to 14 wt.-%.

Organic polymeric binder

The organic polymeric binder as component 3) of the present invention are polymers and/or copolymers based on at least one olefinically unsaturated monomer. The binder cements the pigment particles into a uniform paint film and also makes the paint adhere to the surface.

Preferred olefinically unsaturated monomers are for example:

vinyl monomers, such as carboxylic esters of vinyl alcohol, as for example vinyl acetate, vinyl propionate and vinyl esters of isononanoic acid or isodecanoic acid, aryl-substituted olefins, such as styrene and stilbene, olefinically unsatutrated carboxylic esters, such as methyl acrylate, ethyl acrylate, propyl acrylate, n-butyl acrylate, isobutyl acrylate, pentyl acrylate, hexyl acrylate, 2-ethylhexyl acrylate, hydroxyethyl acrylate, and also the corresponding methacrylic esters, olefinically unsaturated dicarboxylic esters, such as dimethyl maleate, diethyl maleate, dipropyl maleate, dibutyl maleate, dipentyl maleate, dihexyl maleate, and di-2-ethylhexyl maleate, olefinically unsaturated carboxylic acids and dicarboxylic acids, such as acrylic acid, methacrylic acid, itaconic acid, maleic acid, and fumaric acid, and their sodium, potassium , and ammonium salts, olefinically unsaturated sulfonic acids and phosphonic acids and their alkali metal and ammonium salts, such as acrylamidomethylpropanesulfonic acid and its alkali metal and ammonium salts, alkylammonium and hydroxyalkylammonium salts, and allylsulfonic acid and its alkali metal and ammonium salts, acryloyloxyethylphosphonic acid and its ammonium and alkali metal salts, and also the corresponding methacrylic acid derivatives, olefinically unsaturated amines, ammonium salts, nitriles and amides, such as dimethylaminoethyl acrylate, acryloyloxyethyltrimethylammonium halides, acrylonitrile, N-methylacrylamide, and also the corresponding methacrylic acid derivatives, and vinylmethylacetamide.

The denoted concentration refers to the solids content of polymer. The film forming polymers are preferably incorporated in the paints according to the invention in form of aqueous dispersions.

Stabilizers

The component 4) of the present invention are stabilizers of the formula C) containing at least two positively charged nitrogen atoms.

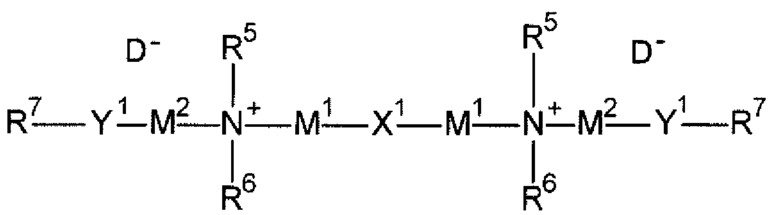

(C)

Quaternary ammonium salts are known stabilizers in paint formulations. Surprisingly, it was found that the combined use of the above mentioned copolymers and certain structural derivatives of molecular formula C) shows an highly effective stabilizing effect on the rheological properties of paints containing water glass.

In a preferred embodiment, $R^5$, $R^6$ are independently alkyl groups with 1 to 4 carbon atoms, more preferably methyl.

In another preferred embodiment, $R^7$ is hydrogen or alkyl with 1 to 4 carbon atoms, more preferably H or methyl.

In another preferred embodiment, $M^1$ and $M^2$ are independently a methylene, ethylene or propylene group.

In another preferred embodiment, $X^1$ is a single bond, methylene or - O -.

In another preferred embodiment, D is selected from the group consisting of chloride, bromide, iodide, methyl carbonate, methosulfate, sulfate, bisulfate, carbonate, bicarbonate, hydroxide, trifluoromethanesulfonate and tosylate. More preferably, D is selected from the group consisting of chloride, bromide, iodide, methyl carbonate, methosulfate, bisulfate, bicarbonate, hydroxide, trifluoromethanesulfonate and tosylate. Still more preferably, D is selected from the group consisting of chloride, bromide, iodide.

In another preferred embodiment, the stabilizer comprises quaternary alkyl ammonium salts of the general formula C) wherein

| | |
|---|---|
| $R^5$, $R^6$ | are methyl groups and |
| $M^1$ | is a 1 to 5 carbon atom alkylene group, |
| $M^2$ | is a methylene group, |
| $Y^1$ | is a covalent bond, |
| $R^7$ | is a hydrogen, |
| $X^1$ | is selected from a covalent bond, a methylene group, O or $N^+(R^5,R^6)$ and |
| $D^-$ | is chloride, bromide or iodide. |

In another preferred embodiment, the stabilizer comprises quaternary ammonium salts of the molecular formula C) wherein

| | |
|---|---|
| $R^5$ and $R^6$ | are methyl groups and |
| $M^1$ | is a 1 to 5 carbon atom alkylene group, |
| $X^1$ | is selected from a covalent bond, a methylene group, O or $N^+(R^5,R^6)$, |
| $D^-$ | is chloride, bromide or iodide, |
| $R^7$ | is an alkyl group containing 1 to 18 carbon atoms, |
| $M^2$ | is an alkylene group containing 1-5 carbon atoms and |
| $Y^1$ | is an amide group -NHC(O)-. |

In another preferred embodiment, the stabilizer comprises quaternary ammonium salts of the molecular formula C) wherein

| | |
|---|---|
| $R^5$, $R^6$ and $R^7$ | are methyl groups, |
| $M^2$ | is a 3 carbon atom alkylene group, |
| $M^1$ | is a 2 carbon atom alkylene group, |
| $X^1$ | is a covalent bond and |
| $Y^1$ | is an amide group -NHC(O)-; |
| $D^-$ | is bromide. |

The amide group $Y^1$ is in general of the configuration $-M^2-NHC(O)-R^7$.

Pigments

Suitable pigments and fillers as component 4) of the present invention are white inorganic pigments and fillers such as, for example, titanium dioxides, calcium carbonates, talc, kaolin, barium sulfates, zinc sulfides, and zinc oxides. Preference is also given to the use of mixtures of the stated white inorganic pigments. One particularly preferred mixture of inorganic white pigments comprises titanium dioxide, calcium carbonate and talc;

colored inorganic pigments such as, for example iron oxides, magnetite, manganese iron oxides, chrome oxides, ultramarine, nickel- or chrome antimony titanate, manganese titanium rutile, cobalt oxides, mixed oxides of cobalt and aluminium, mixed-phase pigments with rutile structures, rare earths sulfides, nickel- or zinc cobalt spinel, iron chrome spinel with copper zinc and manganese, bismuth vanadates, can be also used. Specially preferred are the colored inorganic pigments corresponding to the color indexes Pigment Yellow 184, Pigment Yellow 53, Pigment Yellow 42, Pigment Brown 42, Pigment Red 101, Pigment Blue 28, Pigment Blue 36, Pigment Green 50, Pigment Green 17, Pigment Black 11, Pigment Black 33;
organic pigments such as, for example, carbon blacks, monoazo- and disazopigments, specially the color index pigments Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 or Pigment Brown 41; β-Naphthol- und Naphthol AS-pigments, specially the color index pigments Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 or Pigment Brown 1; lake azo- and metal complex pigments, specially the color index pigments Pigment Red 48:2, Pigment Red 48:3, Pigment Red 48:4, Pigment Red 57:1, Pigment Red 257, Pigment Orange 68 oder

Pigment Orange 70; benzimidazolone pigments, especially the color index pigments Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 or Pigment Brown 25; isoindolinon- and isoindoline pigments, specially the color index pigments Pigment Yellow 139 oder Pigment Yellow 173; phthalocyanine pigments, especially the color index pigments Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; anthanthrone-, anthraquinone-, quinacridone-, dioxazine-, indanthrone-, perylene-, perinone- und thioindigo pigments, especially the color index pigments Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 or Pigment Orange 43; triarylcarbonium pigments, especially the color index pigments Pigment Red 169, Pigment Blue 56 or Pigment Blue 61;

diketopyrrolopyrrole pigments, especially the color index pigments Pigment Red 254, Pigment Red 255, Pigment Red 264, Pigment Red 270, Pigment Red 272, Pigment Orange 71, Pigment Orange 73 or Pigment Orange 81.

Further additives

The composition according to the invention may comprise further additives. This denotes customary auxiliaries which may be used in the paint composition of the present invention, such as wetting agents, dispersants, defoamers, rheological additives, biocides, fungicides and algicides, film-forming assistants and pH-adjusting agents.

Suitable wetting agents and dispersants are preferentially homopolymers and copolymers of acrylic acid, methacrylic acid, maleic acid, fumaric acid and the sodium, potassium, and ammonium salts thereof; polyphosphonates and phosphonic acid derivatives; alkylphenolethoxylates, fatty acid and fatty alcohol derivatives, especially the ethoxylation products; ethylene oxide / propylene oxide homo- and block-copolymers and polysiloxane ethers.

Suitable defoamers are mineral oil defoamers, silicone defoamers, or defoamers based on polyalkylene glycol ethers. Defoaming components of the stated defoamer classes are hydrophobic particulate solids such as hydrophobically modified silica, fatty acid salts of divalent and trivalent cations such as aluminium stereate, amide waxes such as ethylenbisstearylamide, and silicone resins.

Suitable rheological additives are starch- and cellulose derivatives, hydrophobic modified ethoxylated urethanes (HEUR) thickeners, alkali-soluble acrylate thickeners, xanthan gums, clays, polymers based on acrylamide methylpropane sulfonic acid, or pyrogenic silica.

Suitable biocides are formaldehyde and formaldehyde donor compounds such as dihydroxy-2,5-dioxahexane, chlormethylisothiazolinone, benzylisothiazolinone, benzimidazolinone, and bronopol. To prevent infestation by fungi and algae, particularly following application of the paint to exterior walls, facades, shingles, and metallic and plastic parts in the exterior sector, film preservatives may be added to the paints. Suitable examples include diuron, carbendazim, octylisothiazolinone, dichlorooctylisothiazolinone, zinc pyrithione, terbutryn, and irgarol.

Suitable pH-adjusting agents are alkali metal hydroxides or ammonium hydroxide or organic amines. Specially preferred are lithium, sodium and potassium hydroxide. Among the organic amines, 2-amino-2-methyl-1-propanol, N-methyl-D-glucamine and N,N-dimethyl-D-glucamine are specially preferred.

Suitable film-forming assistants are substances which lower the minimum film formation temperature to down to below 5 °C, such as, for example, white spirit, methylpropylene glycol, methyldipropylene glycol, methyltripropylene glycol, butyl glycol, butyldipropylene glycol, and butyltripropylene glycol, diethylene glycol benzoate, trimethylpentane-1,3-diol monoisobutyrate, isodecylbenzoate, isononylbenzoate, monoethylene glycol, and monopropylene glycol monooleate, and lactic esters of alcohols having 6 to 30 carbon atoms.

In case that the paint composition according to this invention contains one or more auxiliaries as described under component (v), following concentrations are preferred for each of the different classes of auxiliaries:

up to 10 wt.-% of wetting agents and/or dispersants
up to 5 wt.-% of defoamers
up to 5 wt.-% of rheological additives
up to 5 wt.-% of biocides, fungicides and/or algicides
up to 5 wt.-% of film forming assistants
up to 10 wt.-% of pH-adjusting agents

In an preferred embodiment, the inventive composition is free from biocides, fungicides and/or algicides.

In a preferred form of the invention, the pH of the paint composition is adjusted to a value from 10 to 12.

In a preferred form of the invention, the concentration of biocides, fungicides and/or algicides is < 0.01 wt.-%. Specially preferred is a total concentration of isothiazolinones < 0.01 wt.-%. Most particularly preferred is a total concentration of isothiazolinones < 0.0015 wt.-%.

Also part of the present invention is a method to prepare the paint composition according to this invention. According to the method, the copolymer (1) is added to water and dissolved or mixed with water as an already aqueous polymer solution. Auxiliaries, such as wetting agents, dispersants, defoamers, rheological additives, biocides, fungicides and algicides, film-forming assistants and/or pH-adjusting agents are optionally added. The stabilizer (4) can be added in one portion before the pigments or after. The stabilizer (4) can be also added in two portions, before and after the addition of the pigments Afterwards the pigments and/or fillers (5) are added and finely dispersed, followed by the addition of the film forming polymer (3), preferably in form of an aqueous dispersion, the water glass (2), preferably as an aqueous solution of concentration lower than 40 wt.-% and molar ratio >3.2, and optionally auxiliaries. Finally the pH is preferably adjusted to a value between 10 and 12, by eventual addition of pH-adjusting agents if required, and the final solids concentration is adjusted by addition of water (6).

Also part of the present invention is the use of the paint composition containing water glass for outdoor, indoor, façade, roof and floor applications.

The paint compositions according to the present invention show excellent storage stability. Only slight increase of the viscosity is observed after warm storage, which remains at low value. Furthermore, the excellent rheological profile of the paint composition after storage is confirmed by moderate thixotropic behavior and gel-character of the paint, which ensures excellent workability and handling properties of the paint.

In this document, including in all embodiments of all aspects of the present invention, the following definitions apply unless specifically stated otherwise.

All percentages are by weight (w/w) of the total composition. "wt.-%" means percentage by weight; "vol.-%" means percentage by volume; "mol-%" means percentage by mole. All ratios are weight ratios. References to 'parts' e.g. a mixture of 1 part X and 3 parts Y, is a ratio by weight. "QS" or "QSP" means sufficient quantity for 100 % or for 100 g. +/- indicates the standard deviation.

All measurements are understood to be made at 23 °C and at ambient conditions, where "ambient conditions" means at 1 atmosphere (atm) of pressure and at 50 % relative humidity. "Relative humidity" refers to the ratio (stated as a percent) of the moisture content of air compared to the saturated moisture level at the same temperature and pressure. Relative humidity can be measured with a hygrometer, in particular with a probe hygrometer from VWR® International.

Herein "min" means "minute" or "minutes". Herein "mol" means mole. Herein "g" following a number means "gram" or "grams". "Ex." means "example".

All amounts as they pertain to listed ingredients are based on the active level ('solids') and do not include carriers or by-products that may be included in commercially available materials. Herein, "comprising" means that other steps and other ingredients can be in addition. The compositions, formulations, methods, uses, kits, and processes of the present invention can comprise, consist of, and consist essentially of the elements and limitations of the invention described herein, as well as any of the additional or optional ingredients, components, steps, or limitations described herein. Embodiments and aspects described herein may comprise or be combinable with elements, features or components of other embodiments and/or aspects despite not being expressly exemplified in combination, unless an incompatibility is stated. "In a preferred embodiment" means that one or more embodiments, optionally all embodiments or a large subset of embodiments, of the present invention has/have the subsequently described feature. Where amount ranges are given, these are to be understood as being the total amount of said ingredient in the composition, or where more than one species fall within the scope of the ingredient definition, the total amount of all ingredients fitting that definition, in the composition.

The following acronyms are used herein: APEG 1100 or PEG-A 1100 or Polyglykol A 1100 = $\alpha$-2-propen-1-yl-$\omega$-hydroxypoly(oxy-1,2-ethanediyl) with a molecular weight of $M_w$=1100g/mol; APEG 2400 or PEG-A 2400 or Polyglykol A 2400 = $\alpha$-2-propen-1-yl-$\omega$-hydroxypoly(oxy-1 ,2-ethanediyl) with a molecular weight of $M_w$=2400g/mol; APEG 5000 or PEG-A 5000 or Polyglykol A 5000 = $\alpha$-2-propen-1-yl-$\omega$-hydroxypoly(oxy-1 ,2-ethanediyl) with a molecular weight of $M_w$=5000g/mol; AS = acrylic acid; MAS = meth acrylic acid; APS = Ammonium persulfate, SPS = Sodium persulfate, KPS = Potassium persulfate.

Unless otherwise stated, viscosity herein is measured at 23 °C in centipoise (cP) or mPa·s using a Haake Mars III rheometer (Thermo Scientific).

"Molecular weight" or "M.Wt." "Mw", "$M_w$" or "MW" and grammatical equivalents mean the weight average molecular weight, unless otherwise stated. Also relevant for the determination of the molecular weight distribution is the number average molecular weight "Mn", "$M_n$" and grammatical equivalents, and the polydispersity "D" or "PDI".

Number average molecular weight: $M_n$

The number average molecular weight is the statistical average molecular weight of all the polymer chains in the sample, and is defined by:

$$Mn = \frac{\sum NiMi}{\sum Ni}$$

where $M_i$ is the molecular weight of a chain and $N_i$ is the number of chains of that molecular weight. $M_n$ can be predicted by polymerisation mechanisms and is measured by methods that determine the number of molecules in a sample of a given weight; for example, colligative methods such as end-group assay. If $M_n$ is quoted for a molecular weight distribution, there are equal numbers of molecules on either side of $M_n$ in the distribution.

Weight average molecular weight: Mw

The weight average molecular weight is defined by:

$$MW = \frac{\sum NiMi^2}{\sum NiMi}$$

Compared to $M_n$, Mw takes into account the molecular weight of a chain in determining contributions to the molecular weight average. The more massive the chain, the more the chain contributes to Mw. Mw is determined by methods that are sensitive to the molecular size rather than just their number, such as light scattering techniques. If Mw is quoted for the molecular weight distribution, there is an equal weight of molecules on either side of Mw in the distribution.

The polydispersity index PDI is used as a measure of the broadness of a molecular weight distribution of a polymer, and is defined by:

$$PDI = \frac{MW}{Mn}$$

The larger the PDI, the broader the molecular weight. A monodisperse polymer where all the chain lengths are equal (such as a protein) has an $M_W/M_n$=1.

The weight average molecular weight can be measured by gel permeation chromatography (GPC), also referred to as size exclusion chromatography (SEC). The molecular weight of polymers and its measurement is described in the textbook "Principles of Polymerization" by Georg Odian, third edition, Wiley-Interscience, New York, in chapter 1 - 4, page 19 to 24, ISBN 0-471-61020-8. The process to determine the weight average molecular weight is described in detail in chapter 3 of Makromolekulare Chemie: Eine Einführung" by Bernd Tieke, Wiley-VCH, 2. vollständig überarbeitete und erweiterte Auflage (3. Nachdruck 2010) ISBN-13: 978-3-527-31379-2, page 259 - 261.

Determination of molecular weight and distribution of Polymer samples by GPC was determines under the following conditions.

| | |
|---|---|
| Column: | 1x PreColumn 10μm (modified cross linked acrylate copolymer)<br>1X 30 Å 10 μm, 300 mm x 8 mm ID (modified cross linked acrylate copolymer)<br>1X 1000 Å 10 μm, 300 mm x 8 mm (modified cross linked acrylate copolymer) |
| Eluent: | 55 wt.-% acetonitrile /45 wt.-% water + 1,25 g/L Disodium hydrogen phosphate |
| Detector: | RI |
| Oven temperature: | 27 °C |
| Flow: | 1 ml/min |
| Injection volume: | 10 μl |
| Sample conc.: | 5 g/l |
| Solvent: | 55 wt.-% acetonitrile / 45 w.-% water + 1,25 g/L Disodium hydrogen phosphate |
| Calibration: | Polyethylene glycol standards in the range from 430 - 1,015,000 Dalton |

"Water-soluble" refers to any material that is sufficiently soluble in water to form a clear solution to the naked eye at a concentration of 0.1 % by weight of the material in water at 25 °C. The term "water-insoluble" refers to any material that is not "water-soluble".

"Monomer" means a discrete, non-polymerised chemical moiety capable of undergoing polymerisation in the presence of an initiator or any suitable reaction that creates a macromolecule e.g. such as radical polymerisation,

polycondensation, polyaddition, anionic or cationic polymerization, ring opening polymerisation or coordination insertion polymerisation. "Unit" means a monomer that has already been polymerised i.e. is part of a polymer.

"Polymer" means a chemical formed from the polymerisation of two or more monomers. The term "polymer" shall include all materials made by the polymerisation of monomers as well as natural polymers. Polymers made from only one type of monomer are called homopolymers. Herein, a polymer comprises at least two monomers. Polymers made from two or more different types of monomers are called copolymers. The distribution of the different monomers can be random, alternating or block-wise (i.e. block copolymer). The term "polymer" used herein includes any type of polymer including homopolymers and copolymers.

"Derivatives" includes but is not limited to, amide, ether, ester, amino, carboxyl, acetyl, acid, salts and/or alcohol derivatives of a given compound. In a preferred embodiment, "derivatives thereof' means the amide, ether, ester, amino, carboxyl, acetyl, acid, salt and alcohol derivatives.

Examples

Polyglykol A is a polyalkylene glycol allylether.

Polyglykol A 2400 is a polyalkylene glycol allylether with a molecular mass of 2400 g/mol.

Polyglykol A 1100 is a polyalkylene glycol allylether with a molecular mass of 1100 g/mol.

Polyglykol A 5000 is a polyalkylene glycol allylether with a molecular mass of 5000 g/mol.

Polymerization process: General polymerization procedure in water

Dose in a 2-Liter Quickfit round bottom flask equipped with a refux condenser, two over surface gas inlet tubing connected with dosing pumps (e.g. Dosing pump A and Dosing pump B), inner temperature sensor and overhead agitator 579.30 g Polyglykol A 2400 according to Formula (B) is dispersed in 183.00 g distilled water. Inject nitrogen subsurface for 1h at agitation of 200 rpm. During this time the temperature of the reaction mixture is raised and stabilized to 80 °C with help of a water bath. 72.00 g Acrylic acid according to formula (A1) dissolved in 198.00 g distilled water (Solution A). Inject nitrogen subsurface for 15 Min at agitation of 200 rpm. Solution A is connected to Dosing Pump A. 2.88 g APS dissolved in 270.00 g distilled water (Solution B). Inject nitrogen subsurface for 15 Min at agitation of 200 rpm. Solution B is connected to Dosing Pump B. Solution A and B are pumped separately with Dosing pump A and Dosing pump B into the reaction vessel. After a few minutes the start of polymerization becomes obvious due to the rising temperature.

After complete dosing of Solution A and B the reaction solution is stirred for further 3 h and cooled down to room temperature. Adjust the pH at 23 °C with approx. 130.5 g of Sodium hydroxide solution (30 wt.-% in water) to a pH of 10.5.

Table 1: Copolymers 1

| Copolymer | Reaction Vessel | | | Dosing Pump A | | | Dosing Pump B | | |
|---|---|---|---|---|---|---|---|---|---|
| | Structural units according to Formula (B) | | Dissolved in Water | Structural units according to Formula (A1) | | Dissolved in Water | Initiator | | Dissolved in Water |
| | Name | /g | /g | Name | /g | /g | Name | /g | /g |
| 1 | Polyglykol A 2400 | 579.3 | 183 | Acrylic acid | 72 | 198 | APS | 2.88- | 270 |
| 2 | Polyglykol A 5000 | 396 | 120 | Acrylic acid | 8 | 80 | APS | 0.11 | 200 |
| 3 | Polyglykol A 1100 | 360 | 100 | Acrylic acid | 36 | 100 | APS | 0.54 | 200 |
| 4 | Polyglykol A 2400 | 193.1 | 41 | Acrylic acid | 14 | 76 | APS | 0.64 | 90 |
| 5 | Polyglykol A 2400 | 579.3 | 153 | Acrylic acid | 27 | 213 | APS | 1.44 | 240 |

Synthesis of the invention related stabilizers

Stabilizer 1

To N,N,-dimethyl amino propyl amine (163.4 g) was added acetic acid at a maximal internal temperature of 100 °C. Afterwards, the mixture was heated to 150 °C for 2 h, followed by removal of water at 130 °C for another 12 h, while applying vacuum. 157.5 g of the crude amide was mixed with 117.9 g of 1 ,4-Dibromo butane and the mixtures was heated to 100 °C for 8 h. Completion of the reaction was monitored by amino value titration. Ammonia (9.7 g, 30 wt.-% solution) was added and the mixture was heated for another 2 h at 100 °C. Afterwards, the volatiles were removed at 135 °C while applying vacuum. NMR spectroscopy and amino value titration were used to verify the structure of the stabilizer. The crude product was diluted with water to form a 50 wt.-% solution.

General procedure for the synthesis of stabilizer 2 - 4

The tertiary amine and water (50 wt.-%) were added to a 1 L glass autoclave. A Nitrogen atmosphere applied by alternated pressure flushing, followed by heating of the reaction mixture to 60 °C. At this temperature methyl chloride (1.1 eq. per amine) was added at a maximum pressure of 5 bars. The reaction mixture was stirred until constant pressure, followed by gradually applying vacuum for removal of excess methyl chloride at 60 °C. The product was analyzed by NMR.

Table 2: Stabilizers

| Stabilizer | Raw material | $R^5$ | $R^6$ | $R^7$ | $M^1$ | $M^2$ | $X^1$ | $Y^1$ | $D^-$ | Conversion (NMR) |
|---|---|---|---|---|---|---|---|---|---|---|
| 1 | - | $CH_3$ | $CH_3$ | $CH_3$ | $CH_2CH_2$ | $CH_2CH_2CH_2$ | - | NHCO | Br | > 95% |
| 2 | N,N,N',N'-Tetramethyl-1,3-propanediamine | $CH_3$ | $CH_3$ | H | $CH_2$ | $CH_2$ | $CH_2$ | - | $Cl^-$ | > 98% |
| 3 | N,N,N',N'-Tetramethylhexamethylene-1,6-diamine | $CH_3$ | $CH_3$ | H | $CH_2CH_2CH_2$ | $CH_2$ | - | - | $Cl^-$ | > 98% |
| 4 | Bis[2-(N,N-dimethylamino)ethyl]ether | $CH_3$ | $CH_3$ | H | $CH_2CH_2$ | $CH_2$ | O | - | $Cl^-$ | >98% |
| "-" represents a single bond | | | | | | | | | | |

General procedure for the synthesis of the invention related paint fomulations.

Polymers:

- Invention related: Copolymer 1 as described in Table 1.
- State-of-the-art: Sepatin® D27 from Wollner (declared as aqueous solution of modified phosphonic acid salts, solids content 45 wt.-%, an especially recommended for the manufacture of silicate paints)

Additives:

- Invention related: as described in § above
    - Stabilizer 2
    - Stabilizer 3
    - Stabilizer 4
    - Stabilizer 1
- State-of-the-art:
    - Betolin® A11 from Wöllner (declared as a mixture containing potassium methyl siliconate, potassium hydroxide and potassium ethylenediaminetetraacetate)
    - Betolin® Q40 from Wöllner (declared as N,N,N', N '-tetrakis(hydroxypropyl)ethylenediamine)
    - Cycloquart® from BASF (declared as polymer derived from N,N,N',N'-tetramethyl-1,6-hexanediamine and 3 propylene oxide units) (= Dispersogen SPS)

The invention related copolymers were tested at 0.90 wt.-% active concentration in combination with the invention related additives at 0.70 wt.-% active concentration in a paint formulation as shown below in table 3.

For the comparative examples, state-of-the-art additive technology was used. As representative example of additives based on quaternary organic diamines, Cycloquart® from BASF (declared as polymer derived from N,N,N',N'-tetramethyl-1,6-hexanediamine and 3 propylene oxide units) was used at 0.70 wt.-% active concentration in comparative example 1.

As example of a combination of amines and alkyl siliconates, Betolin® A11 from Wöllner (declared as a mixture containing potassium methyl siliconate, potassium hydroxide and potassium ethylenediaminetetraacetate) at 0.3 wt.-% active concentration and Betolin® Q40 from Wöllner (declared as N,N,N',N'-tetrakis(hydroxypropyl)ethylenediamine) at 0.4 wt.-% active concentration were tested in comparative example 2. In the comparative examples 1 and 2 Sepatin® D27 from Wöllner (declared as aqueous solution of modified phosphonic acid salts, solids content 45 wt.-%, especially recommended for the manufacture of silicate paints) at 0.90 wt.-% active concentration was used as dispersing agent in addition to the above mentioned additives.

In comparative example 3 a combination of state-of-the art Sepatin® D27 with novel stabilizer 1 is described.

In comparative example 4a combination of copolymer 1 with state-of-the art Cycloquart is described.

Table 3: Paint composition containing water glass

| Component | Chemical Description | Supplier | Function | Mass in wt.-% |
|---|---|---|---|---|
| Tylose® H 30000 P2 | hydroxyethylcellulose | SE Tylose GmbH | rheological modifier | 0.4 |
| Agitan® E 256 | polysiloxane copolymer with hydrophobic silica | Münzig Chemie GmbH | defoamer | 0.30 |

(continued)

| Component | Chemical Description | Supplier | Function | Mass in wt.-% |
|---|---|---|---|---|
| Tiona® 595 | titanium dioxide | Cristal Corporate | pigment | 10 |
| Finntalc® M30SL | talc | Mondo Minerals B.V. | filler | 5.0 |
| Omyacarb® 2 GU | calcium carbonate of mean particle size of 2 μm | Omya GmbH | Filler | 10.0 |
| Omyacarb® 5 GU | calcium carbonate of mean particle size of 5 μm | Omya GmbH | filler | 16.0 |
| Omyacarb® extra GU | calcium carbonate of mean particle size of 1 μm | Omya GmbH | filler | 3.70 |
| Mowilith® LDM 6119 | styrene-acrylic acid ester copolymer aqueous dispersion with 50 wt.-% solids content | Celanese | organic binder | 9.0 |
| Silres BS 1306 | silicone aqueous emulsion with 55 wt.-% solids content | Wacker | water repellency enhancer | 0.65 |
| Betolin® K 28 | 28 wt.-% aqueous solution of water glass molar ratio $SiO_2$:$K_2O$ > 3.2 | Wöllner GmbH | inorganic binder | 16.0 |
| Water | | | solvent | fill to 100 |

The rheological properties of the paint samples were investigated after preparation and after 28 days storage at 50 °C.

The paint samples were characterized in a Haake Mars III rheometer (Thermo Scientific). Since sample history may significantly influence the results of the measurements, an accurate protocol was followed for sample taking, loading and pre-shearing in order to make sure that all samples had experienced the similar process immediately before the measurements started. A solvent trap filled with water and a cover were used to avoid solvent evaporation during the measurements. The measurements were done at 23 °C. A cone (1° 60 mm)-plate geometry was used for the shear stress controlled measurements and a plate (35 mm)-plate geometry for the oscillatory measurements. A shear rate ramp between 1 and 200 s-1 was recorded and the value of the viscosity was taken at a shear rate of 60 s-1. The thixotropic behavior was evaluated by recording a shear rate ramp from 0.1 to 1000 s-1 and back. The area between the up and down curves was used as an indication of the thixotropy of the sample. Dynamic oscillatory measurements conducted applying a strain ramp between 0.1 and 100 % at constant frequency of 1.592 Hz were used to investigate the gel character the paints and the elastic modulus was determined from the linear plateau value of the curve corresponding to the linear viscoelastic region of the paint sample.

Results are shown in table 4.

The better performance of the invention related samples in comparison to the comparative examples is indicated by the smaller changes and lower values of viscosity after storage test, which points to a better stabilization of the paint. Furthermore, the samples do not show sedimentation or any symptom of phase separation after storage. The invention related paint samples show after storage smaller values of thixotropy, which is an indication of better workability. In addition, the elastic moduli of the invention related samples are lower, which indicates a weaker gel character of the paints and therefore a better stabilization of the waterglass during storage. The invention related paint compositions with lower thixotropy and gel character show a better appearance and are better to handle and to utilize in comparison to the comparative examples.

Table 4: Rheological properties of the paint samples

| Sample | Polymer | Additive | Initial Viscosity (mPas) | Viscosity after storage (mPas) | Viscosity change factor (viscosity after storage / initial viscosity) | Thixotropy after storage (Pals) | Elastic module after storage (Pa) |
|---|---|---|---|---|---|---|---|
| PLJ-WEA-491 | 1 | DIJ-THM-381 | 689.5 | 1374.4 | 1.99 | 21410 | 117 |
| PLJ-WEA-492 | 1 | DIJ-THM-386 | 663.3 | 1133 | 1.71 | 20600 | 285 |
| PLJ-WEA-493 | 1 | DIJ-THM-388 | 593.7 | 1091 | 1.84 | 18960 | 228 |
| PLJ-WEA-515 | 1 | HOF-DIM-573 | 663.8 | 1495.1 | 2.25 | 27260 | 297 |
| comp. 1 | Sepatin D27 | Cycloquart | 894.8 | 2618.6 | 2.93 | 56300 | 323 |
| comp. 2 | Sepatin D27 | Betolin A11 + Betolin Q 40 | 2212.5 | 5053.5 | 2.28 | 110800 | 7763 |
| comp. 3 | Sepatin D27 | HOF-DIM-573 | 810.6 | 2017.5 | 2.49 | 46440 | 823.5 |
| comp. 4 | 1 | Cycloquart | 762.86 | 2418.7 | 3.17 | 49640 | 732.3 |

**Claims**

**1.** Aqueous paint composition comprising:

1) 0.01 to 5 wt.-% of a copolymer comprising

(A) from 50 mol-% to 98 mol-% of repeating anionic structural units comprising at least one carboxylate group, and
(B) 2 mol-% to 50 mol-% repeating units according to formula (B1)

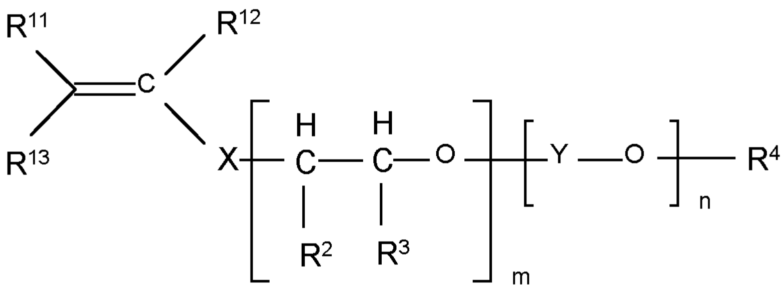

(B1)

wherein

$R^{11}$, $R^{12}$, $R^{13}$, are independently selected from the group consisting of H, methyl, ethyl,
$R^2$ and $R^3$ are independently selected from the group consisting of H, methyl, ethyl or phenyl,
$R^4$ is selected from H or an alkyl group with 1 to 4 carbon atoms,

X is selected from O, $CH_2O$ or $CH_2CH_2O$,
Y is selected from an alkylene group with 1 to 28 carbon atoms or a phenylene group,
m is an integer from 1 to 500,
n is an integer from 0 to 500; and
$m + n \geq 5$,

2) 3.5 to 15.0 wt.-% of water glass,
3) 1.0 to 10 wt.-% of an organic polymeric binder that cements the pigment particles into a uniform paint film and makes the paint adhere to the surface,
4) 0.1 to 2.0 wt.-% of a stabilizer according to formula (C)

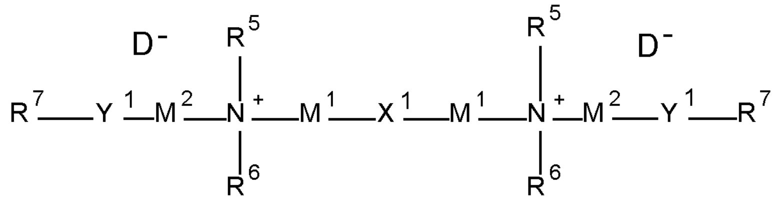

(C)

wherein

$R^5$ and $R^6$ are independently selected from alkyl groups containing 1 - 8 carbon atoms,
$R^7$ is selected from a group consisting of H or an alkyl group containing 1 to 18 carbon atoms,
$M^1$ and $M^2$ are independently selected from alkenyl groups containing 1 to 5 carbon atoms
$X^1$ is selected from the group consisting of a covalent bond, methylene, O or $N^+(R^5R^6)$,
$Y^1$ is selected from group consisting of a covalent bond or an amide group -NHC(O)-,
$D^-$ is an anion,

5) 10 to 70 wt.-% of pigments and/or fillers,
6) 20 to 85 wt.-% of water.

**2.** Composition according to claim 1, comprising 30 to 60 wt.-% water.

**3.** Composition according to claim 1 and/or 2, comprising repeating anionic structural units comprising at least one carboxylate group in an amount of 55 mol-% to 95 mol-%, more preferably from 60 mol-% to 90 mol-%.

**4.** Composition according to one or more of claims 1 to 3, comprising repeating anionic structural units comprising at least one carboxylate group according to formula (A1)

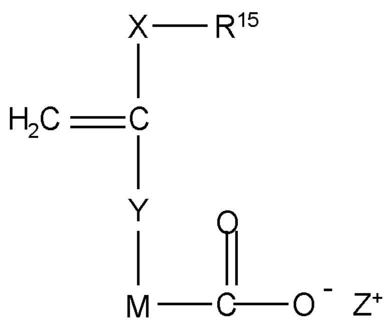

(A1)

wherein

X, Y are selected from the group consisting of a covalent bond, O, $CH_2$, C(O)O, OC(O), $C(O)NR^{14}$ or $NR^{14}C(O)$;
$R^{15}$ and $R^{14}$ are independently selected from the group consisting of H, methyl, ethyl, and $C(O)O^-Z^+$;
M is selected from the group consisting of a covalent bond, $-[C(O)O-CH_2-CH_2]_k-$, a linear or branched alkylene group with 1 to 6 carbon atoms, a linear or branched, mono- or polyunsaturated alkenylene group with 2 to 6 carbon atoms, a linear mono-hydroxyalkylene group with 2 to 6 carbon atoms or a linear or branched di-hydroxyalkylene group with 3 to 6 carbon atoms;
k is an integer from 1 to 5; and
$Z^+$ is selected from the group consisting of $Li^+$, $Na^+$, $K^+$, ½ $Ca^{++}$, ½ $Mg^{++}$, ½ $Zn^{++}$, ⅓ $Al^{+++}$, $H^+$, $NH_4^+$, an organic ammonium ion $[HNR^8R^9R^{10}]^+$
$R^8$, $R^9$, $R^{10}$ are independently hydrogen, a linear or branched alkyl group with 1 to 22 carbon atoms, a linear or branched, mono- or polyunsaturated alkenyl group with 2 to 22 carbon atoms, a $C_6$ to $C_{22}$ alkylamidopropyl group, a linear mono-hydroxyalkyl group with 2 to 10 carbon atoms or a linear or branched di-hydroxyalkyl group with 3 to 10 carbon atoms, and wherein at least one of $R^8$, $R^9$ and $R^{10}$ is not hydrogen.

**5.** Composition according to claim 4, wherein $Z^+$ is selected from the group consisting of $H^+$, $NH_4^+$, $Li^+$, $Na^+$, $K^+$, ½ $Ca^{++}$, ½ $Mg^{++}$, ½ $Zn^{++}$, or 1/3 $Al^{+++}$, and is more preferably $H^+$, $NH_4^+$, $Li^+$, $Na^+$ or $K^+$, and is most preferably $Na^+$.

**6.** Composition according to claim 4, wherein $Z^+$ is selected from the group consisting of monoalkylammonium, dialkylammonium and trialkylammonium salts, in which the alkyl substituents may independently of one another be ($C_1$ to $C_{22}$)-alkyl radicals or ($C_2$ to $C_{10}$)-hydroxyalkyl radicals.

**7.** Composition according to one or more of claims 1 to 6, wherein the repeating anionic structural unit comprising at least one carboxylate group is selected from the group consisting of acrylic acid, methacrylic acid, itaconic acid, carboxyethylacrylic acid, carboxyethylacrylic acid oligomers, 2-propylacrylic acid, 2-ethylacrylic acid, maleic acid and their respective salts, most preferably arylic acid or its salt.

**8.** Composition according to claims 4 or 5, wherein the repeating units according to formula (A1) have a degree of neutralisation of between 50.0 to 100 mol-%, preferably from 80 mol-% to 100 mol-%, more preferably from 90.0 to 100 mol-%, even more preferably from 95.0 to 100 mol-%.

**9.** Composition according to one or more of claims 1 - 8, wherein in formula (B1) m is 5 to 200, preferably 10 to 100.

**10.** Composition according to one or more of claims 1 - 9, wherein in formula (B1) $R^{11}$, $R^{12}$ and $R^{13}$ are H and X is 0.

**11.** Composition according to one or more of claims 1 - 9, wherein in formula (B1) $R^{11}$ and $R^{13}$ are H, $R^{12}$ is $CH_3$ and X is $-CH_2-CH_2-O-$.

**12.** Composition according to one or more of claims 1 - 9, wherein in formula (B1) $R^{11}$, $R^{12}$, $R^{13}$ are H and X is $-CH_2-O-$.

**13.** Composition according to one or more of claims 1 - 9, wherein in formula (B1) $R^{11}$, $R^{13}$ are H, $R^{12}$ is $CH_3$ and X is and X is $-CH_2-O-$.

**14.** Composition according to one or more of claims 1 - 13, wherein in formula (B1) n is from 1 to 500.

**15.** Composition according to one or more of claims 1 - 14, wherein in formula (B1) the unit $-(CHR_2-CHR_3-O)_m-$ is a propylene oxide unit and the unit $-(Y-O)_n-$ is an ethylene oxide unit.

**16.** Composition according to one or more of claims 1 - 15, wherein the molar fraction of ethylene oxide units is higher than 50 %, more preferably higher than 95 %, based on the sum of ethylene and propylene oxide groups.

**17.** Composition according to one or more of claims 1 - 16, wherein $m+n \geqq 10$, preferably $m+n \geqq 20$.

**18.** Composition according to one or more of claims 1 - 17, wherein X is O or $-CH_2-O-$.

**19.** Composition according to one or more of claims 1 - 18, wherein Y is $-CH_2-$, $-CH_2-CH_2-$, phenylene or $-CH_2-CHR$ with R = $C_1$ to $C_{26}$ alkyl.

**20.** Composition according to one or more of claims 1 - 19, wherein repeating anionic structural units (A) and (B), which are repeating units according to formula (B1), add to 100 mol-%.

**21.** Composition according to one or more of claims 1 - 20, wherein the amount of water glass is from 3.5 to 15 wt.-%, preferably from 4 to 14 wt.-%.

**22.** Composition according to one or more of claims 1 - 21, wherein in formula (C) $R^5$ and $R^6$ are independently alkyl groups having 1 to 4 carbon atoms, preferably methyl groups.

**23.** Composition according to one or more of claims 1 - 22, wherein in formula (C) $R^7$ is H or $C_1$ to $C_4$ alkyl, preferably H or $CH_3$.

**24.** Composition according to one or more of claims 1 - 23, wherein in formula (C) $M^1$ and $M^2$ are independently methylene, ethylene or propylene groups.

**25.** Composition according to one or more of claims 1 - 24, wherein in formula (C) $X^1$ is a single bond, methylene or -O-.

**26.** Composition according to one or more of claims 1 - 25, wherein in formula (C) D is selected from the group consisting of chloride, bromide, iodide, methyl carbonate, methosulfate, sulfate, bisulfate, carbonate, bicarbonate, hydroxide, trifluoromethanesulfonate and tosylate, preferably from the group consisting of chloride, bromide, iodide, methyl carbonate, methosulfate, bisulfate, bicarbonate, hydroxide, trifluoromethanesulfonate and tosylate and still more preferably from the group consisting of chloride, bromide, iodide.

**27.** Use of 0.01 to 5 wt.-% of a copolymer comprising

(A) from 50 mol-% to 98 mol-% of repeating anionic structural units comprising at least one carboxylate group, and
(B) 2 mol-% to 50 mol-% repeating units according to formula (B1)

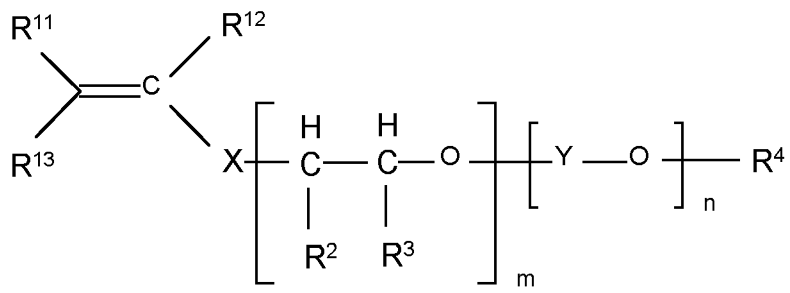

(B1)

wherein

$R^{11}$, $R^{12}$, $R^{13}$, are independently selected from the group consisting of H, methyl, ethyl,
$R^2$ and $R^3$ are independently selected from the group consisting of H, methyl, ethyl or phenyl,
$R^4$ is selected from H or an alkyl group with 1 to 4 carbon atoms,
X is selected from O, $CH_2O$ or $CH_2CH_2O$,
Y is selected from an alkylene group with 1 to 28 carbon atoms or a phenylene group,
m is an integer from 1 to 500,
n is an integer from 0 to 500; and
$m + n \geq 5$,

to reduce the increase of viscosity, thixotropy and gel character upon storage of an aqueous paint composition comprising
2) 3.5 to 15.0 wt.-% of water glass,
3) 1.0 to 10 wt.-% of an organic polymeric binder that cements the pigment particles into a uniform paint film and makes the paint adhere to the surface,
4) 0.1 to 2.0 wt.-% of a stabilizer according to formula (C)

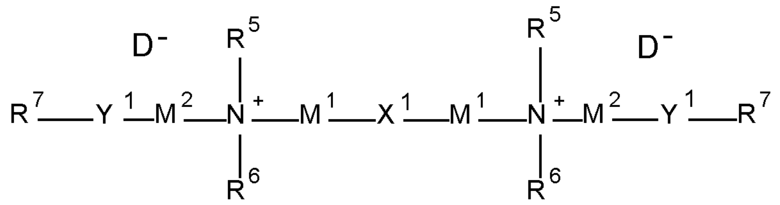 (C)

wherein

$R^5$ and $R^6$ are independently selected from alkyl groups containing 1 - 8 carbon atoms,
$R^7$ is selected from a group consisting of H or an alkyl group containing 1 to 18 carbon atoms,
$M^1$ and $M^2$ are independently selected from alkenyl groups containing 1 to 5 carbon atoms
$X^1$ is selected from the group consisting of a covalent bond, methylene, O or $N^+(R^5R^6)$,
$Y^1$ is selected from group consisting of a covalent bond or an amide group -NHC(O)-,
$D^-$ is an anion,

5) 10 to 70 wt.-% of pigments and/or fillers, and
6) 20 to 85 wt.-% of water.

**Patentansprüche**

**1.** Wässrige Farbzusammensetzung, enthaltend:

1) 0,01 bis 5 Gew.-% eines Copolymers, umfassend

(A) von 50 Mol-% bis 98 Mol-% sich wiederholende anionische Struktureinheiten, die mindestens eine Carboxylatgruppe enthalten, und
(B) 2 Mol-% bis 50 Mol-% sich wiederholende Einheiten gemäß der

Formel (B1)

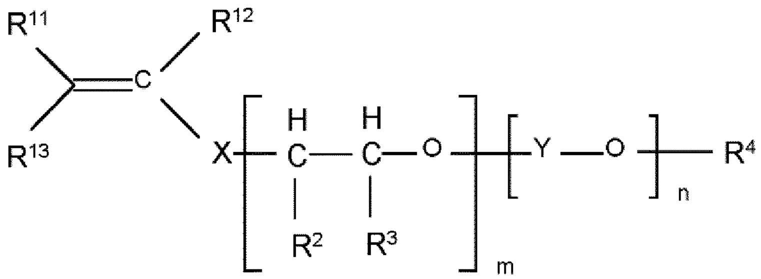 (B1)

worin

$R^{11}$, $R^{12}$, $R^{13}$ unabhängig voneinander aus der Gruppe ausgewählt sind, die aus H, Methyl, Ethyl besteht,
$R^2$ und $R^3$ unabhängig voneinander aus der Gruppe ausgewählt sind, die aus H, Methyl, Ethyl oder Phenyl besteht,
$R^4$ aus H oder einer Alkylgruppe mit 1 bis 4 Kohlenstoffatomen ausgewählt ist,
X aus O, $CH_2O$ oder $CH_2CH_2O$ ausgewählt ist,
Y aus einer Alkylengruppe mit 1 bis 28 Kohlenstoffatomen oder einer Phenylengruppe ausgewählt ist,
m eine ganze Zahl von 1 bis 500 ist,
n eine ganze Zahl von 0 bis 500 ist; und
m + n > 5 ist,

2) 3,5 bis 15,0 Gew.-% Wasserglas,

3) 1,0 bis 10 Gew.-% eines organischen polymeren Bindemittels, das die

Pigmentteilchen zu einem gleichmäßigen Farbfilm verkittet und die Farbe an der Oberfläche haften lässt,

4) 0,1 bis 2,0 Gew.-% eines Stabilisators gemäß

Formel (C)

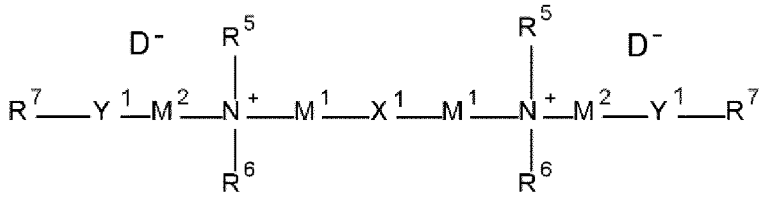

(C)

wobei

$R^5$ und $R^6$ unabhängig voneinander aus Alkylgruppen ausgewählt sind, die 1 - 8 Kohlenstoffatome enthalten,
$R^7$ aus einer Gruppe ausgewählt ist, die aus H oder einer Alkylgruppe mit 1 bis 18 Kohlenstoffatomen besteht,
$M^1$ und $M^2$ unabhängig voneinander aus Alkenylgruppen ausgewählt sind, die 1 bis 5 Kohlenstoffatome enthalten,
$X^1$ aus der Gruppe ausgewählt ist, die aus einer kovalenten Bindung, Methylen, O oder $N^+(R^5R^6)$ besteht,
$Y^1$ aus der Gruppe ausgewählt ist, die aus einer kovalenten Bindung oder einer Amidgruppe -NHC(O)- besteht,
$D^-$ ein Anion ist,

5) 10 bis 70 Gew.-% an Pigmenten und/oder Füllstoffen,
6) 20 bis 85 Gew.-% Wasser.

**2.** Zusammensetzung nach Anspruch 1, umfassend 30 bis 60 Gew.-% Wasser.

**3.** Zusammensetzung nach Anspruch 1 und/oder 2, umfassend sich wiederholende anionische Struktureinheiten mit mindestens einer Carboxylatgruppe in einer Menge von 55 Mol-% bis 95 Mol-%, bevorzugter von 60 Mol-% bis 90 Mol-%.

**4.** Zusammensetzung nach einem oder mehreren der Ansprüche 1 - 3, umfassend sich wiederholende anionische Struktureinheiten, umfassend mindestens eine Carboxylatgruppe gemäß Formel (A1)

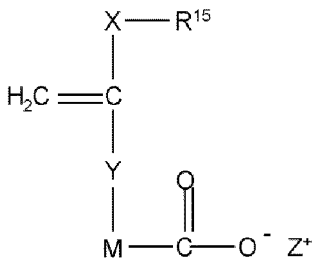

(A1)

wobei

X, Y aus der Gruppe ausgewählt sind, die aus einer kovalenten Bindung, O, $CH_2$, C(O)O, OC(O), $C(O)NR^{14}$ oder $NR^{14}C(O)$ besteht;
$R^{15}$ und $R^{14}$ unabhängig voneinander aus der Gruppe ausgewählt sind, bestehend aus H, Methyl, Ethyl, und $C(O)O^-Z^+$,
M aus der Gruppe ausgewählt ist, bestehend aus einer kovalenten Bindung,

$-[C(O)O-CH_2-CH_2]_k-$, einer linearen oder verzweigten Alkylengruppe

mit 1 bis 6 Kohlenstoffatomen, einer linearen oder verzweigten, einfach oder mehrfach ungesättigten Alkenylengruppe mit 2 bis 6 Kohlenstoffatomen, einer linearen Monohydroxyalkylengruppe mit 2 bis 6 Kohlenstoffatomen oder einer linearen oder verzweigten Dihydroxyalkylengruppe mit 3 bis 6 Kohlenstoffatomen;

k eine ganze Zahl von 1 bis 5 ist; und
$Z^+$ aus der Gruppe ausgewählt ist, bestehend aus $Li^+$, $Na^+$, $K^+$, 1/2 $Ca^{++}$, 1/2 $Mg^{++}$, 1/2 $Zn^{++}$, 1/3 $Al^{+++}$, $H^+$, $NH_4^+$, einem organischen AmmoniumIon $[HNR^8R^9R^{10}]^+$,
$R^8$, $R^9$, $R^{10}$ unabhängig voneinander Wasserstoff, eine lineare oder verzweigte

Alkylgruppe mit 1 bis 22 Kohlenstoffatomen, eine lineare oder verzweigte, einfach oder mehrfach ungesättigte Alkenylgruppe mit 2 bis 22 Kohlenstoffatomen, eine $C_6$- bis $C_{22}$-Alkylamidopropylgruppe, eine lineare Monohydroxyalkylgruppe mit 2 bis 10 Kohlenstoffatomen oder eine lineare oder verzweigte Dihydroxyalkylgruppe mit 3 bis 10 Kohlenstoffatomen sind, und wobei mindestens einer der Reste $R^8$, $R^9$ und $R^{10}$ nicht Wasserstoff ist.

**5.** Zusammensetzung nach Anspruch 4, wobei $Z^+$ aus der Gruppe ausgewählt ist, bestehend aus $H^+$, $NH_4^+$, $Li^+$, $Na^+$, $K^+$, 1/2 $Ca^{++}$, 1/2 $Mg^{++}$, 1/2 $Zn^{++}$ oder 1/3 $Al^{+++}$, und bevorzugter $H^+$, $NH_4^+$, $Li^+$, $Na^+$ oder $K^+$ ist, und am meisten bevorzugt $Na^+$ ist.

**6.** Zusammensetzung nach Anspruch 4, wobei $Z^+$ aus der Gruppe ausgewählt ist, bestehend aus Monoalkylammonium-, Dialkylammonium- und Trialkylammonium-salzen, in denen die Alkylsubstituenten unabhängig voneinander ($C_1$- bis $C_{22}$) -Alkylreste oder ($C_2$- bis $C_{10}$-Hydroxyalkylreste sein können.

**7.** Zusammensetzung nach einem oder mehreren der Ansprüche 1 - 6, worin die sich wiederholende anionische Struktureinheit, die mindestens eine Carboxylatgruppe umfasst, aus der Gruppe ausgewählt wird, die aus Acrylsäure, Methacrylsäure, Itaconsäure, Carboxyethylacrylsäure, Carboxyethylacrylsäure-Oligomeren, 2-Propyl-acrylsäure, 2-Ethylacrylsäure, Maleinsäure und ihren jeweiligen Salzen, am meisten bevorzugt Acrylsäure oder ihr Salz, besteht.

**8.** Zusammensetzung nach Anspruch 4 oder 5, wobei die sich wiederholenden Einheiten gemäß Formel (A1) einen Neutralisationsgrad zwischen 50,0 und 100 Mol-%, vorzugsweise von 80 Mol-% bis 100 Mol-%, noch bevorzugter von 90,0 bis 100 Mol-%, sogar noch bevorzugter von 95,0 bis 100 Mol-% aufweisen.

**9.** Zusammensetzung nach einem oder mehreren der Ansprüche 1 - 8, wobei in der Formel (B1) m 5 bis 200, vorzugsweise 10 bis 100, beträgt.

**10.** Zusammensetzung nach einem oder mehreren der Ansprüche 1 - 9, wobei in Formel (B1) $R^{11}$, $R^{12}$ und $R^{13}$ H sind und X O ist.

**11.** Zusammensetzung nach einem oder mehreren der Ansprüche 1 - 9, wobei in der Formel (B1) $R^{11}$ und $R^{13}$ H sind, $R^{12}$ $CH_3$ ist und X $-CH_2-CH_2-O-$ ist.

**12.** Zusammensetzung nach einem oder mehreren der Ansprüche 1 - 9, wobei in der Formel (B1) $R^{11}$, $R^{12}$, $R^{13}$ H sind, und X $-CH_2-O-$ ist.

**13.** Zusammensetzung nach einem oder mehreren der Ansprüche 1 - 9, wobei in der Formel (B1) $R^{11}$, $R^{13}$ H sind, $R^{12}$ $CH_3$ ist und X $-CH_2-O-$ ist.

**14.** Zusammensetzung nach einem oder mehreren der Ansprüche 1 --- 13, wobei in der Formel (B1) n 1 bis 500 ist.

**15.** Zusammensetzung nach einem oder mehreren der Ansprüche 1 - 14, wobei in der Formel (B1) die Einheit $-(CHR_2-CHR_3-O)_m-$ eine Propylenoxideinheit und die Einheit $-(Y-O)_n-$ eine Ethylenoxideinheit ist.

**16.** Zusammensetzung nach einem oder mehreren der Ansprüche 1 - 15, wobei der Molenbruch der Ethylenoxideinheiten mehr als 50 %, stärker bevorzugt mehr als 95 %, bezogen auf die Summe der Ethylen- und Propylenoxidgruppen, beträgt.

**17.** Zusammensetzung nach einem oder mehreren der Ansprüche 1 - 16, wobei m+n ≧ 10, vorzugsweise m+n ≧ 20 ist.

**18.** Zusammensetzung nach einem oder mehreren der Ansprüche 1 - 17, worin X für O oder $-CH_2-O-$ steht.

**19.** Zusammensetzung nach einem oder mehreren der Ansprüche 1 - 18, worin Y $-CH_2-$, $-CH_2-CH_2-$, Phenylen oder $-CH_2-CHR$ ist, mit R = $C_1$- bis $C_{26}$-Alkyl.

**20.** Zusammensetzung nach einem oder mehreren der Ansprüche 1 - 19, **dadurch gekennzeichnet, dass** sich die wiederholdenden anionischen Struktureinheiten (A) und (B), welche die sich wiederholenden Einheiten gemäß Formel (B1) sind, zu 100 Mol-% aufaddieren.

**21.** Zusammensetzung nach einem oder mehreren der Ansprüche 1 - 20, wobei die Menge an Wasserglas 3,5 bis 15 Gew.-%, vorzugsweise 4 bis 14 Gew.-% beträgt.

**22.** Zusammensetzung nach einem oder mehreren der Ansprüche 1 - 21, wobei in Formel (C) $R^5$ und $R^6$ unabhängig voneinander Alkylgruppen mit 1 bis 4 Kohlenstoffatomen, vorzugsweise Methylgruppen, sind.

**23.** Zusammensetzung nach einem oder mehreren der Ansprüche 1 - 22, wobei in der Formel (C) $R^7$ H oder $C_1$-bis $C_4$-Alkyl, vorzugsweise H oder $CH_3$, ist.

**24.** Zusammensetzung nach einem oder mehreren der Ansprüche 1 - 23, wobei in Formel (C) $M^1$ und $M^2$ unabhängig voneinander Methylen-, Ethylen- oder Propylengruppen sind.

**25.** Zusammensetzung nach einem oder mehreren der Ansprüche 1 - 24, wobei in der Formel (C) $X^1$ eine Einfachbindung, Methylen oder -O- ist.

**26.** Zusammensetzung nach einem oder mehreren der Ansprüche 1 - 25, wobei in Formel (C) D aus der Gruppe ausgewählt ist, bestehend aus Chlorid, Bromid, Jodid, Methylcarbonat, Methosulfat, Sulfat, Bisulfat, Carbonat, Bicarbonat, Hydroxid, Trifluormethansulfonat und Tosylat, vorzugsweise aus der Gruppe bestehend aus Chlorid, Bromid, Iodid, Methylcarbonat, Methosulfat, Bisulfat, Bicarbonat, Hydroxid, Trifluormethansulfonat und Tosylat und noch bevorzugter aus der Gruppe bestehend aus Chlorid, Bromid, Iodid.

**27.** Verwendung von 0,01 bis 5 Gew.-% eines Copolymers, umfassend

(A) 50 Mol-% bis 98 Mol-% sich wiederholende anionische Struktureinheiten, die mindestens eine Carboxylatgruppe enthalten,
und
(B) 2 Mol-% bis 50 Mol-% sich wiederholende Einheiten gemäß der Formel
(B1)

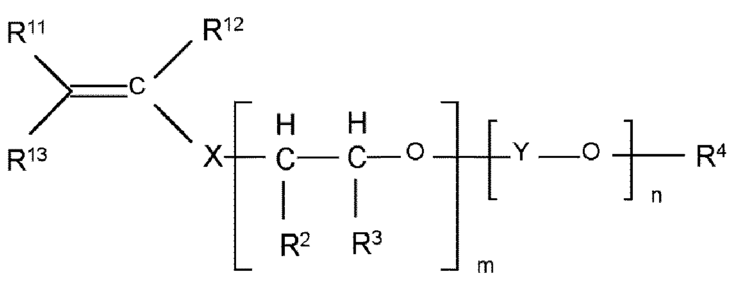

(B1)

worin

$R^{11}$, $R^{12}$, $R^{13}$ unabhängig voneinander aus der Gruppe ausgewählt sind, die aus H, Methyl, Ethyl besteht,
$R^2$ und $R^3$ unabhängig voneinander aus der Gruppe ausgewählt sind, die Aus H, Methyl, Ethyl oder Phenyl besteht,
$R^4$ aus H oder einer Alkylgruppe mit 1 bis 4 Kohlenstoffatomen ausgewählt ist,

X aus O, $CH_2O$ oder $CH_2CH_2O$ ausgewählt ist,
Y aus einer Alkylengruppe mit 1 bis 28 Kohlenstoffatomen oder
Einer Phenylengruppe ausgewählt ist,
m eine ganze Zahl von 1 bis 500 ist,
n eine ganze Zahl von 0 bis 500 ist; und
$m + n > 5$ ist,

um die Viskosittät, die Thixotropie und den Gelcharakter nach der Lagerung einer wässrigen Farbzusammensetzung zu verringern, die
2) 3,5 bis 15,0 Gew.-% Wasserglas,
3) 1,0 bis 10 Gew.-% eines organischen polymeren Bindemittels, das die Pigmentteilchen zu einem gleichmäßigen Farbfilm verkittet und die Farbe an der Oberfläche haften lässt,
4) 0,1 bis 2,0 Gew.-% eines Stabilisators gemäß

Formel (C)

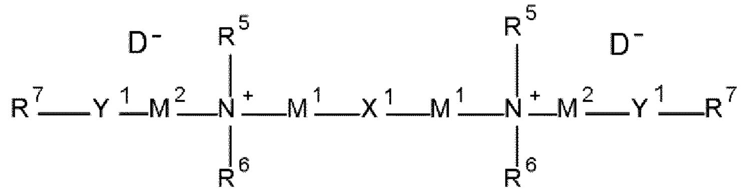

(C)

wobei

$R^5$ und $R^6$ unabhängig voneinander aus Alkylgruppen ausgewählt sind, die 1 - 8 Kohlenstoffatome enthalten,
$R^7$ aus einer Gruppe ausgewählt ist, die aus H oder einer Alkylgruppe mit 1 bis 18 Kohlenstoffatomen besteht,
$M^1$ und $M^2$ unabhängig voneinander aus Alkenylgruppen ausgewählt sind, die 1 bis 5 Kohlenstoffatome enthalten,
$X^1$ aus der Gruppe ausgewählt ist, die aus einer kovalenten Bindung, Methylen, O oder $N^+(R^5R^6)$ besteht,
Y1 aus der Gruppe ausgewählt ist, die aus einer kovalenten Bindung oder einer Amidgruppe -NHC(O)- besteht,
$D^-$ ein Anion ist,

5) 10 bis 70 Gew.-% an Pigmenten und/oder Füllstoffen,
6) 20 bis 85 Gew.-% Wasser.

**Revendications**

**1.** Composition aqueuse de peinture comprenant :

1) 0,01 à 5 % en poids d'un copolymère comprenant

(A) de 50 % en moles à 98 % en moles de motifs structuraux anioniques répétitifs comprenant au moins un groupe carboxylate,
et
(B) 2 % en moles à 50 % en moles de motifs répétitifs selon la formule (B1)

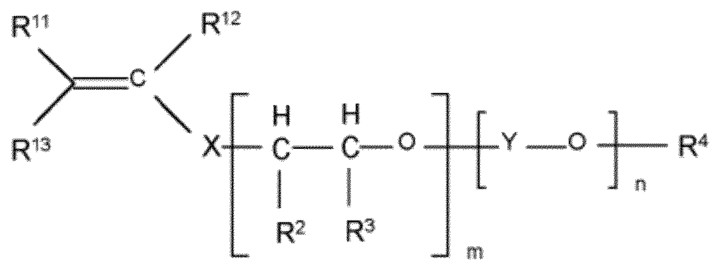

(B1)

$R^{11}$, $R^{12}$, $R^{13}$ étant indépendamment choisis dans le groupe constitué par H, méthyle, éthyle,
$R^2$ et $R^3$ étant indépendamment choisis dans le groupe constitué par H, méthyle, éthyle ou phényle,
$R^4$ étant choisi parmi H ou un groupe alkyle comportant 1 à 4 atomes de carbone,
X étant choisi parmi O, $CH_2O$ ou $CH_2CH_2O$,
Y étant choisi parmi un groupe alkylène comportant 1 à 28 atomes de carbone ou un groupe phénylène,
m étant un entier de 1 à 500,
n étant un entier de 0 à 500 ; et
$m + n \geq 5$,

2) 3,5 à 15,0 % en poids de verre d'eau,
3) 1,0 à 10 % en poids d'un liant polymérique organique qui cimente les particules de pigment en un film de peinture uniforme et fait adhérer la peinture à la surface,
4) 0,1 à 2,0 % en poids d'un stabilisant selon la formule (C)

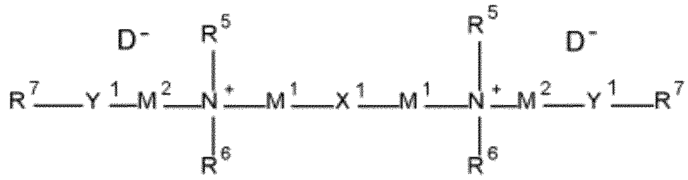

(C)

$R^5$ et $R^6$ étant indépendamment choisis parmi des groupes alkyle contenant 1-8 atomes de carbone,
$R^7$ étant choisi dans un groupe constitué par H ou un groupe alkyle contenant 1 à 18 atomes de carbone,
$M^1$ et $M^2$ étant indépendamment choisis parmi des groupes alcényle contenant 1 à 5 atomes de carbone,
$X^1$ étant choisi dans le groupe constitué par une liaison covalente, méthylène, O ou $N^+(R^5R^6)$,
$Y^1$ étant choisi dans un groupe constitué par une liaison covalente ou un groupe amide -NHC(O)-, $D^-$ étant un anion,

5) 10 à 70 % en poids de pigments et/ou charges,
6) 20 à 85 % en poids d'eau.

**2.** Composition selon la revendication 1, comprenant 30 à 60 % en poids d'eau.

**3.** Composition selon la revendication 1 et/ou 2, comprenant des motifs structuraux anioniques répétitifs comprenant au moins un groupe carboxylate en une quantité de 55 % en moles à 95 % en moles, plus préférablement de 60 % en moles à 90 % en moles.

**4.** Composition selon l'une ou plusieurs des revendications 1 à 3, comprenant des motifs structuraux anioniques répétitifs comprenant au moins un groupe carboxylate selon la formule (A1)

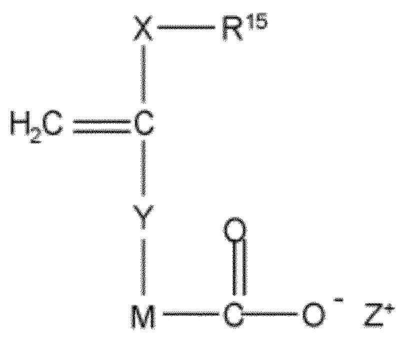

(A1)

X, Y étant choisis dans le groupe constitué par une liaison covalente, O, $CH_2$, C(O)O, OC(O), C(O)$NR^{14}$ ou $NR^{14}$C(O) ;
$R^{15}$ et $R^{14}$ étant indépendamment choisis dans le groupe constitué par H, méthyle, éthyle, et C(O)O-$Z^+$ ;
M étant choisi dans le groupe constitué par une liaison covalente, -[C(O)O-$CH_2$-$CH_2$]$_k$, un groupe alkylène linéaire ou ramifié comprenant 1 à 6 atomes de carbone, un groupe alcénylène monoinsaturé ou polyinsaturé, linéaire ou ramifié comportant 2 à 6 atomes de carbone, un groupe monohydroxyalkylène linéaire comportant 2 à 6 atomes de carbone ou un groupe dihydroxyalkylène linéaire ou ramifié comportant3 à 6 atomes de carbone ;
k étant un entier de 1 à 5 ; et $Z^+$ étant choisi dans le groupe constitué par $Li^+$, $Na^+$, $K^+$, ½ $Ca^{++}$, ½ $Mg^{++}$, ½ $Zn^{++}$, ½ $Al^{+++}$, $H^+$, $NH_4^+$, un ion ammonium organique $[HNR^8R^9R^{10}]^+$
$R^8$, $R^9$, $R^{10}$ étant indépendamment hydrogène, un groupe alkyle linéaire ou ramifié comportant 1 à 22 atomes de carbone, un groupe alcényle monoinsaturé ou polyinsaturé, linéaire ou ramifié comportant 2 à 22 atomes de carbone, un groupe $C_6$ à $C_{22}$ alkylamidopropyle, un groupe mono-hydroxyalkyle linéaire comportant 2 à 10 atomes de carbone ou un groupe dihydroxyalkyle linéaire ou ramifié comportant 3 à 10 atomes de carbone, et au moins l'un parmi $R^8$, $R^9$ et $R^{10}$ n'étant pas hydrogène.

5. Composition selon la revendication 4, $Z^+$ étant choisi dans le groupe constitué par $H^+$, $NH_4^+$, $Li^+$, $Na^+$, $K^+$, ½ $Ca^{++}$, ½ $Mg^{++}$, ½ $Zn^{++}$, ou ⅓ $Al^{+++}$, et étant plus préférablement $H^+$, $NH_4^+$, $Li^+$, $Na^+$ ou $K^+$, et étant le plus préférablement $Na^+$.

6. Composition selon la revendication 4, $Z^+$ étant choisi dans le groupe constitué par des sels de monoalkylammonium, de dialkylammonium et de trialkylammonium, dans lesquels les substituants alkyle peuvent indépendamment les uns des autres être des radicaux alkyle en ($C_1$ à $C_{22}$) ou des radicaux hydroxyalkyle en ($C_2$ à $C_{10}$).

7. Composition selon l'une ou plusieurs des revendications 1 à 6, le motif structural anionique répétitif comprenant au moins un groupe carboxylate étant choisi dans le groupe constitué par l'acide acrylique, l'acide méthacrylique, l'acide itaconique, l'acide carboxyéthylacrylique, des oligomères d'acide carboxyéthylacrylique, l'acide 2-propylacrylique, l'acide 2-éthylacrylique, l'acide maléique et leurs sels respectifs, plus préférablement l'acide acrylique ou son sel.

8. Composition selon les revendications 4 ou 5, les motifs répétitifs selon la formule (A1) ayant un degré de neutralisation comprise entre 50,0 et 100 % en moles, préférablement de 80 % en moles à 100 % en moles, plus préférablement de 90,0 à 100 % en moles, encore plus préférablement de 95,0 à 100 % en moles.

9. Composition selon l'une ou plusieurs des revendications 1 à 8, dans la formule (B1), m étant 5 à 200, préférablement de 10 à 100.

10. Composition selon l'une ou plusieurs des revendications 1 à 9, dans la formule (B1), $R^{11}$, $R^{12}$ et $R^{13}$ étant H et X étant O.

11. Composition selon l'une ou plusieurs des revendications 1 à 9, dans la formule (B1), $R^{11}$ et $R^{13}$ étant H, $R^{12}$ étant $CH_3$ et X étant -$CH_2$-$CH_2$-O-.

12. Composition selon l'une ou plusieurs des revendications 1 à 9, dans la formule (B1), $R^{11}$, $R^{12}$ et $R^{13}$ étant H et X étant -$CH_2$-O-.

13. Composition selon l'une ou plusieurs des revendications 1 à 9, dans la formule (B1), $R^{11}$ et $R^{13}$ étant $CH_3$ et X étant -$CH_2$-O-.

**14.** Composition selon l'une ou plusieurs des revendications 1 à 13, dans la formule (B1), n étant de 1 à 500.

**15.** Composition selon l'une ou plusieurs des revendications 1 à 14, dans la formule (B1), le motif $-(CHR_2-CHR_3-O)_m-$ étant un motif d'oxyde de propylène et le motif $-(Y-O)_n-$ étant un motif d'oxyde d'éthylène.

**16.** Composition selon l'une ou plusieurs des revendications 1 à 15, la fraction molaire de motifs d'oxyde d'éthylène étant supérieure à 50 %, plus préférablement supérieure à 95 %, sur la base de la somme des groupes d'oxyde d'éthylène et de propylène.

**17.** Composition selon l'une ou plusieurs des revendications 1 à 16, $m+n \geq 10$, préférablement $m+n \geq 20$.

**18.** Composition selon l'une ou plusieurs des revendications 1 à 17, X étant O ou $-CH_2-O-$.

**19.** Composition selon l'une ou plusieurs des revendications 1 à 18, Y étant $-CH_2-$, $-CH_2-CH_2-$, phénylène ou $-CH_2-CHR$, avec R = alkyle en $C_1$ à $C_{26}$.

**20.** Composition selon l'une ou plusieurs des revendications 1 à 19, les motifs structuraux anioniques répétitifs (A) et (B), qui sont des motifs répétitifs selon la formule (B1), totalisant 100 % en moles.

**21.** Composition selon l'une ou plusieurs des revendications 1 à 20, la quantité de verre d'eau étant de 3,5 à 15 % en poids, préférablement de 4 à 14 % en poids.

**22.** Composition selon l'une ou plusieurs des revendications 1 à 21, dans la formule (C), $R^5$ et $R^6$ étant indépendamment des groupes alkyle ayant 1 à 4 atomes de carbone, préférablement des groupes méthyle.

**23.** Composition selon l'une ou plusieurs des revendications 1 à 22, dans la formule (C), $R^7$ étant H ou alkyle en $C_1$ à $C_4$, préférablement H ou $CH_3$.

**24.** Composition selon l'une ou plusieurs des revendications 1 à 23, dans la formule (C), $M^1$ et $M^2$ étant indépendamment des groupes méthylène, éthylène ou propylène.

**25.** Composition selon l'une ou plusieurs des revendications 1 à 24, dans la formule (C), $X^1$ étant une simple liaison, méthylène ou -O-.

**26.** Composition selon l'une ou plusieurs des revendications 1 à 25, dans la formule (C), D étant choisi dans le groupe constitué par chlorure, bromure, iodure, méthylcarbonate, méthosulfate, sulfate, bisulfate, carbonate, bicarbonate, hydroxyde, trifluorométhanesulfonate et tosylate, préférablement dans le groupe constitué par chlorure, bromure, iodure, méthylcarbonate, méthosulfate, bisulfate, bicarbonate, hydroxyde, trifluorométhanesulfonate et tosylate et encore plus préférablement dans le groupe constitué par chlorure, bromure, iodure.

**27.** Utilisation de 0,01 à 5 % en poids d'un copolymère comprenant

(A) de 50 % en moles à 98 % en moles de motifs structuraux anioniques répétitifs comprenant au moins un groupe carboxylate,
et
(B) 2 % en moles à 50 % en moles de motifs répétitifs selon la formule (B1)

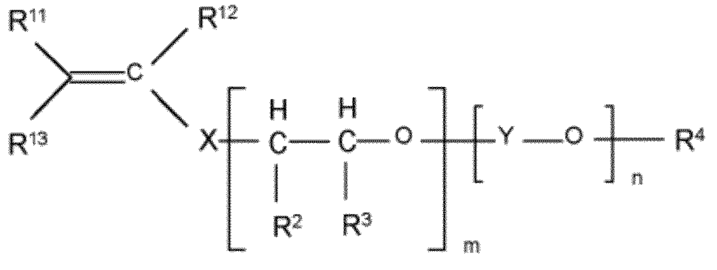

(B1)

$R^{11}$, $R^{12}$, $R^{13}$ étant indépendamment choisis dans le groupe constitué par H, méthyle, éthyle,

$R^2$ et $R^3$ étant indépendamment choisis dans le groupe constitué par H, méthyle, éthyle ou phényle,
$R^4$ étant choisi parmi H ou un groupe alkyle comportant 1 à 4 atomes de carbone,
X étant choisi parmi O, $CH_2O$ ou $CH_2CH_2O$,
Y étant choisi parmi un groupe alkylène comportant 1 à 28 atomes de carbone ou un groupe phénylène,
m étant un entier de 1 à 500,
n étant un entier de 0 à 500 ; et
$m + n \geq 5$,
pour réduire l'augmentation de viscosité, de thixotropie et de caractère de gel lors d'un stockage d'une composition aqueuse de peinture comprenant

2) 3,5 à 15,0 % en poids de verre d'eau,
3) 1,0 à 10 % en poids d'un liant polymérique organique qui cimente les particules de pigment en un film de peinture uniforme et fait adhérer la peinture à la surface,
4) 0,1 à 2,0 % en poids d'un stabilisant selon la formule (C)

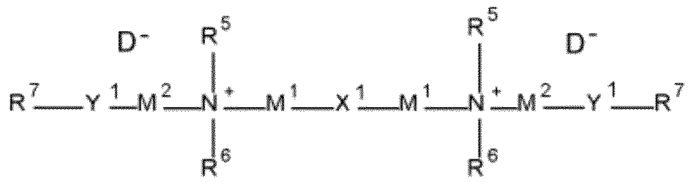

(C)

$R^5$ et $R^6$ étant indépendamment choisis parmi des groupes alkyle contenant 1-8 atomes de carbone,
$R^7$ étant choisi dans un groupe constitué par H ou un groupe alkyle contenant 1 à 18 atomes de carbone,
$M^1$ et $M^2$ étant indépendamment choisis parmi des groupes alcényle contenant 1 à 5 atomes de carbone,
$X^1$ étant choisi dans le groupe constitué par une liaison covalente, méthylène, O ou $N^+(R^5R^6)$,
$Y^1$ étant choisi dans un groupe constitué par une liaison covalente ou un groupe amide -NHC(O)-, $D^-$ étant un anion,

5) 10 à 70 % en poids de pigments et/ou charges, et
6) 20 à 85 % en poids d'eau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 19925412
- WO 2016128033 A
- WO 2008037382 A
- WO 0200798 A
- DE 10063291
- EP 1179517 A


### Non-patent literature cited in the description


- *Rheology Reviews,* 2005, 173-240
- **GEORG ODIAN.** Principles of Polymerization. Wiley-Interscience, 19-24
- **BERND TIEKE.** Makromolekulare Chemie: Eine Einführung. Wiley-VCH, 259-261